(19) **Europäisches Patentamt European Patent Office Office européen des brevets**

(11) **EP 2 483 758 B1**

(12) **FASCICULE DE BREVET EUROPEEN**

(45) Date de publication et mention
de la délivrance du brevet:
**26.06.2019 Bulletin 2019/26**

(21) Numéro de dépôt: **10759660.3**

(22) Date de dépôt: **29.09.2010**

(51) Int Cl.:
***G06F 3/01*** *(2006.01)*    ***G06F 3/038*** *(2013.01)*
***G06F 3/033*** *(2013.01)*

(86) Numéro de dépôt international:
**PCT/EP2010/064501**

(87) Numéro de publication internationale:
**WO 2011/039283 (07.04.2011 Gazette 2011/14)**

(54) **SYSTEME ET PROCEDE DE RECONNAISSANCE DE GESTES**

SYSTEM UND VERFAHREN ZUR GESTENERKENNUNG

SYSTEM AND METHOD FOR RECOGNIZING GESTURES

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **29.09.2009 FR 0956717**

(43) Date de publication de la demande:
**08.08.2012 Bulletin 2012/32**

(73) Titulaires:
• **Movea S.A.
38000 Grenoble (FR)**
• **Commissariat à l'Énergie Atomique
et aux Énergies Alternatives
75015 Paris (FR)**

(72) Inventeurs:
• **DE FORAS, Etienne
F-38240 Maylan (FR)**
• **CARITU, Yanis
F-38134 Saint Joseph de Rivière (FR)**
• **SPRYNSKI, Nathalie
F-30132 Caissargues (FR)**
• **GODIN, Christelle
F-38190 Brignoud (FR)**
• **CHARBONNIER, Sylvie
F-38130 Echirolles (FR)**

(74) Mandataire: **Bell, Mark et al
Marks & Clerk France
Immeuble «Visium»
22, avenue Aristide Briand
94117 Arcueil Cedex (FR)**

(56) Documents cités:
**EP-A2- 0 686 931      WO-A1-2005/076114
WO-A1-2006/090197    WO-A2-2008/116642
GB-A- 2 419 433**

**Description**

La présente invention appartient au domaine des systèmes de reconnaissance de gestes. Plus précisément, elle s'applique à la caractérisation de gestes, notamment humains, par rapport à une base d'apprentissage comprenant des classes de gestes de manière à pouvoir reconnaître lesdits gestes de manière fiable et, éventuellement, utiliser les résultats de ladite reconnaissance pour commander un ou plusieurs dispositifs, notamment électroniques. Un système de ce type comprend normalement un certain nombre de capteurs de position et/ou d'orientation qui permettent d'acquérir plusieurs signaux représentatifs des gestes effectués par le porteur desdits capteurs. Ces capteurs peuvent être par exemple des accéléromètres, des gyromètres ou bien des magnétomètres. Un dispositif de traitement de signal est normalement prévu pour conditionner lesdits signaux. Un dispositif met ensuite en oeuvre une méthode de classification des signaux pour reconnaître le geste dans la base d'apprentissage en se donnant un seuil d'acceptation de la reconnaissance. Plusieurs méthodes de classification sont utilisables, notamment celles utilisées dans la reconnaissance de la parole, telles que les modèles de Markov cachés ou Hidden Markov Models (HMM), la déformation temporelle linéaire ou Linear Time Warping (LTW), et la déformation temporelle dynamique ou Dynamic Time Warping (DTW). Une méthode de reconnaissance de geste de type DTW appliquée dans un système de télécommande d'appareils électroniques (la XWand™ de Microsoft®) est divulguée par la demande EP 1 335 338 ainsi que par la publication *« Gesture Recognition Using The XWand »* (D. Wilson, Carnelie Mellon University, et A. Wilson, Microsoft Research, 2004). Le taux de reconnaissance cité par cette dernière publication, inférieur à 72%, n'est pas acceptable pour des applications industrielles, ce qui rend cette méthode inutilisable.

Les demandes de brevet GB2419433, WO2005/076114, WO2006/090197, WO2008/116642 et EP0686931 divulguent des systèmes de reconnaissance de gestes de types divers. Ces systèmes de l'art antérieur ne permettent cependant pas d'atteindre des taux de reconnaissance satisfaisant. En outre, ils ne permettent pas d'utiliser une base de données de comparaison enrichie en temps réel.

La présente invention résout ce problème en prévoyant à la fois des modalités de prétraitement et de post traitement qui améliorent le taux de reconnaissance dans des proportions très importantes et en permettant d'utiliser une base de données de comparaison enrichie en temps réel.

A cet effet, la présente invention divulgue un système de reconnaissance de gestes selon la revendication 1.

Selon un mode de réalisation de l'invention, lorsque la fonction choisie est une normalisation, un centrage desdits signaux capturés est effectué avant réduction.

Avantageusement, ledit module de capture de signaux générés par lesdits mouvements de ladite entité comprend au moins un capteur de mesures inertielles selon trois axes.

Avantageusement, ledit module de comparaison des signaux capturés sur une plage temporelle effectue ladite comparaison en exécutant un algorithme de déformation temporelle dynamique.

Avantageusement, ledit module de stockage comprend, pour chaque classe de signaux, un vecteur de données représentatif d'au moins une mesure de distance des signaux appartenant à chaque classe.

Avantageusement, le vecteur de données représentatif d'au moins une mesure de distance des signaux appartenant à chaque classe comprend, pour chaque classe de signaux stockés, au moins une mesure de distance intra classe et des mesures de distances entre ladite classe et chacune des autres classes stockées.

Avantageusement, la mesure de distance intra classe est égale à la moyenne des distances deux à deux entre signaux de la classe, chaque distance entre signaux représentatifs de gestes appartenant à la classe étant calculée comme le minimum de l'écart quadratique entre suites d'échantillons des signaux sur des chemins de déformation de type DTW.

Avantageusement, la mesure de distance interclasses est égale à la moyenne des distances deux à deux entre signaux des deux classes, chaque distance entre signaux représentatifs de gestes appartenant à une classe étant calculée comme le minimum de l'écart quadratique entre suites d'échantillons des signaux sur des chemins de déformation de type DTW. Avantageusement, ledit algorithme de déformation temporelle dynamique utilise un critère de reconnaissance du geste représenté par lesdits signaux capturés sur une plage temporelle basé sur une mesure de distance desdits signaux capturés sur une plage temporelle avec le vecteur représentatif des classes de signaux de référence stockés dans ledit module de stockage. Avantageusement, ladite mesure de distance est normalisée par une mesure de distance intra classe.

Avantageusement, ladite mesure de distance est effectuée par calcul par un algorithme de type DTW d'un indice de similarité entre le au moins un signal de mesure et les signaux de référence sur le chemin de coût minimum parcourant une matrice des distances euclidiennes entre le vecteur dont les composantes sont les mesures des axes du au moins un capteur sur le signal à classer et le vecteur de mêmes composantes sur le signal de référence..

Avantageusement, ladite mesure de distance est effectuée par calcul par un algorithme de type DTW d'un indice de similarité entre le au moins un signal de mesure et les signaux de référence sur le chemin de coût minimum parcourant une matrice dont les éléments sont les dérivées du produit scalaire du vecteur de mesure et du vecteur de référence. Avantageusement, ledit module de capture desdits signaux comprend au moins deux capteurs.

Avantageusement, le système de l'invention comprend en outre un module de fusion des données issues du module de comparaison pour les au moins deux capteurs.

Avantageusement, le module de fusion entre les données issues du module de comparaison pour les au moins deux capteurs est apte à exécuter une fonction de vote entre lesdites données issues du module de comparaison pour les au moins deux capteurs.

Avantageusement, ladite mesure de distance est effectuée par une des opérations appartenant au groupe comprenant : i) un calcul par un algorithme de type DTW d'un indice de similarité entre le au moins un signal de mesure et les signaux de référence sur le chemin de coût minimum parcourant une matrice des distances euclidiennes entre le vecteur dont les composantes sont les mesures des axes des au moins deux capteurs sur le signal à classer et le vecteur de mêmes composantes sur le signal de référence, ledit indice de similarité constituant la mesure de distance ; ii) un calcul par un algorithme de type DTW, pour chaque capteur, d'un indice de similarité entre le au moins un signal de mesure et les signaux de référence sur le chemin de coût minimum parcourant une matrice des distances euclidiennes entre le vecteur dont les composantes sont les mesures des axes d'un des au moins deux capteurs sur le signal à classer et le vecteur de même composantes sur le signal de référence, puis un calcul de la mesure de distance par multiplication des indices de similarité fournis en sortie des calculs sur tous les capteurs.

Avantageusement, ladite mesure de distance est effectuée par un calcul, pour chaque capteur, d'un indice de similarité entre le au moins un signal de mesure et les signaux de référence sur le chemin de coût minimum parcourant une matrice dont les éléments sont les dérivées du produit scalaire du vecteur de mesure et du vecteur de référence, puis un calcul de la mesure de distance par une multiplication des indices de similarité fournis en sortie des calculs sur tous les capteurs.

Avantageusement, ladite mesure de distance est effectuée par un calcul par un algorithme DTW, pour chaque capteur, d'un indice de similarité entre le au moins un signal de mesure et les signaux de référence sur le chemin de coût minimum parcourant une matrice constituée soit par les distances euclidiennes entre le vecteur dont les composantes sont les mesures des axes d'un des au moins deux capteurs sur le signal à classer et le vecteur de même composantes sur le signal de référence, soit par les dérivées du produit scalaire du vecteur de mesure et du vecteur de référence, puis un calcul de la mesure de distance par multiplication des indices de similarité fournis en sortie des calculs sur tous les capteurs.

Avantageusement, des données représentatives de la décimation sont stockées par le module de stockage et transmises en entrée du module de comparaison.

Avantageusement, une partie au moins des signaux capturés et des sorties du module de comparaison est apte à être fournie en entrées du module de stockage pour y être traitée, les résultats desdits traitements étant pris en compte par les traitements en cours du module de comparaison. Avantageusement, le système de l'invention comprend en outre, en sortie du module de prétraitement, un module d'extraction de tendance apte à commander l'exécution du module de comparaison.

Avantageusement, ledit module d'extraction de tendance commande l'exécution du module de comparaison lorsque la variation d'une grandeur caractéristique d'un des signaux capturés sur une plage temporelle dépasse un seuil déterminé.

Avantageusement, le système de l'invention comprend en outre, en entrée du module de stockage, un module de regroupement de classes en K groupes de classes représentatifs de familles de gestes.

Avantageusement, la commande du module de comparaison déclenche l'exécution d'une fonction de sélection de celui des K groupes dont le signal comparé est le plus proche puis d'un algorithme de déformation temporelle dynamique entre ledit signal comparé et les gestes des classes dudit groupe sélectionné.

La présente invention divulgue également un procédé de reconnaissance de gestes d'une entité selon la revendication 18.

Avantageusement, ladite normalisation comprend un centrage avant réduction desdits signaux capturés.

L'invention peut être mise en oeuvre sans avoir recours à des aides extérieures telles que la reconnaissance d'images ou de la parole (comme c'est le cas de la XW and™) et ne nécessite donc pas l'utilisation de dispositifs et d'algorithmes complexes de fusion de données.

L'invention présente en outre l'avantage de pouvoir utiliser des capteurs de faibles dimensions, poids, consommation et coût tels que des MEMS (Micro Electro Mechanical Systems).

L'utilisation de mesures inertielles et/ou magnétiques permet également de s'affranchir des limites de volume de capture qui caractérisent les dispositifs à traitement d'image où la capture est limitée au champ des caméras, l'utilisation, toujours possible, de caméras pointables entraînant une complexité beaucoup plus grande du système.

En outre, la capacité donnée par l'invention d'adapter les traitements à différentes classes de capteurs et de scénarios d'emploi en optimisant les modalités de fusion des différentes données permet une grande versatilité et donc une gamme très large d'applications.

Enfin, dans certains modes de réalisation de l'invention, la reconnaissance des gestes capturés peut être effectuée en faisant commander l'exécution de l'algorithme de comparaison uniquement en présence d'une variation significative d'un signal de mouvement et en organisant la base de gestes en groupes de classes.

Ces modes de réalisation permettent la reconnaissance de gestes longs ou de longues séquences pour lesquels on utilise un prétraitement qui décime encore davantage les signaux représentatifs des gestes capturés en utilisant une méthode d'extraction de tendance, permettant ainsi de réduire encore plus le temps de traitement.

L'invention sera mieux comprise et ses différentes caractéristiques et avantages ressortiront de la description qui suit de plusieurs exemples de réalisation et de ses figures annexées dont :

- La figure 1 représente un exemple de scénario d'utilisation de l'invention dans un de ses modes de réalisation;
- La figure 2 est un schéma d'architecture générale du système de l'invention dans un de ses modes de réalisation;
- La figure 3 est un organigramme général des traitements pour mettre en oeuvre l'invention dans un de ses modes de réalisation ;
- La figure 4 illustre une des étapes d'une modalité de prétraitement dans un des modes de réalisation de l'invention;
- La figure 5 illustre un exemple de critère de mise en oeuvre d'un traitement de comparaison de signaux représentatifs de gestes par application d'un algorithme DTW ;
- La figure 6 illustre le taux de reconnaissance d'un système de reconnaissance de gestes de l'invention selon une première variante de critère de décision ;
- Les figures 7A et 7B illustrent respectivement le taux de reconnaissance et le taux de faux positifs d'un système de reconnaissance de gestes de l'invention selon une deuxième variante de critère de décision ;
- Les figures 8A et 8B illustrent respectivement le taux de reconnaissance et le taux de faux positifs d'un système de reconnaissance de gestes de l'invention selon une troisième et une quatrième variante de critère de décision ;
- La figure 9 est un organigramme des traitements appliqués dans le cas d'une reconnaissance de gestes, dans certains modes de réalisation de l'invention utilisant une extraction de tendance et/ou une extraction de caractéristiques;
- La figure 10 illustre le principe de l'extraction de tendance dans certains modes de réalisation de l'invention;
- La figure 11 illustre le principe de l'utilisation d'un algorithme de centres mobiles dans certains modes de réalisation de l'invention.

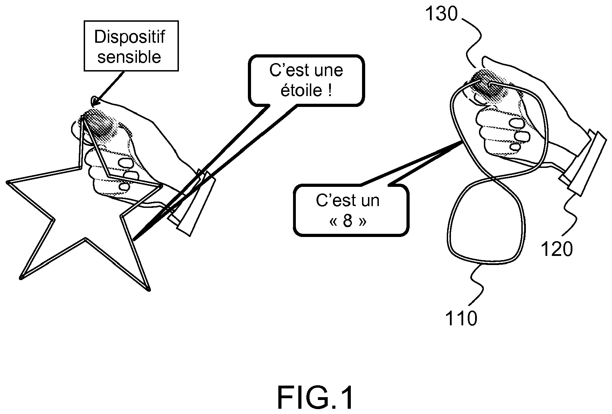

La figure 1 représente un exemple de scénario d'utilisation de l'invention dans un de ses modes de réalisation.

Le système de l'invention porte sur le domaine de la captation et de la reconnaissance de gestes. Ce domaine concerne notamment le grand public pour des applications d'interaction homme machine ou basées sur la reconnaissance de gestes (par exemple, système multimédia, consoles de jeu interactives, télécommande universelle des appareils électriques et/ou électroniques de toute sorte dans une maison, utilisation d'un téléphone mobile comme télécommande, commande d'instruments de musique...). Il peut également concerner des applications professionnelles ou semi professionnelles, telles que la reconnaissance d'écriture ou la simulation d'entraînement pour le sport, le pilotage ou d'autres activités.

Le système de l'invention utilise préférentiellement des capteurs sensibles au mouvement embarqués soit directement sur une personne (à un de ses poignets ou aux deux, à une de ses chevilles ou aux deux, à son torse, etc...) soit dans un dispositif mû par le geste de la personne (souris 3D, télécommande, téléphone, jouet, montre, accessoires, vêtements, ...). La description de l'invention mentionne principalement des capteurs de type MEMS (gyromètres et/ou accéléromètres) et des magnétomètres, mais les principes de l'invention peuvent se généraliser pour d'autres mesures sensibles aux mouvements tells que les captures d'images éventuellement dans l'infrarouge, les mesures de force ou de pression, les mesures effectuées par des cellules photoélectriques, les mesures télémétriques, les mesures par radar ou LIDAR...Une des conditions d'application de l'invention est cependant que les capteurs utilisés permettent de fournir des signaux suffisamment représentatifs des gestes à capturer, en particulier du nombre de degrés de libertés qu'il est nécessaire de prendre en compte pour les reconnaître. On verra plus loin dans la description qu'une redondance de capteurs permet avantageusement d'augmenter de manière significative la performance de reconnaissance par une combinaison pertinente des mesures des différentes sources.

A titre d'exemple, on voit sur la figure 1, un geste 110 représentatif d'un « 8 » réalisé par une entité 120, en l'occurrence une main. Cette entité est instrumentée avec un dispositif sensible aux mouvements 130. Le « 8 » peut par exemple être le numéro d'une chaîne de télévision ou le numéro d'un jeu sur une console. Des objets peuvent ainsi être commandés en étant appelés par un ou plusieurs lettres ou chiffres qui représentent lesdits objets dans un code propre à l'application puis une des fonctions que lesdits objets peuvent exécuter peut être également appelée par un autre caractère alphanumérique d'un deuxième niveau dudit code.

Dans le domaine applicatif du multimédia sur ordinateur individuel ou sur console de salon, l'invention s'applique dans un produit associé à une souris 3D (tenue « en l'air ») ou à tout autre périphérique sensible permettant l'interaction, sous le contrôle d'un logiciel de pilotage. Il peut s'agir par exemple d'une AirMouse™ qui comprend deux capteurs de type gyromètre, chacun à un axe de rotation. Les gyromètres utilisés sont de la marque Epson de référence XV3500. Leurs axes sont orthogonaux et délivrent les angles de tangage (yaw ou rotation autour de l'axe parallèle à l'axe horizontal d'un plan situé face à l'utilisateur de la AirMouse) et de lacet (pitch ou rotation autour d'un axe parallèle à l'axe vertical d'un plan situé face à l'utilisateur de la AirMouse). Les vitesses instantanées de pitch et de yaw mesurées par les deux axes gyromètres sont transmises à un microcontrôleur embarqué dans le boîtier de la souris et converties par ledit microcontrôleur en déplacement. Ces données, représentatives du mouvement d'un curseur dans un écran situé face à l'utilisateur, sont transmises par radiofréquence à un ordinateur ou à l'appareil qui gère l'affichage du curseur en mouvement à l'écran. Les gestes effectués par la main qui tient la AirMouse prennent une signification d'actuation dès lors qu'ils sont reconnus par le système. Par exemple, on effectuera une croix (ou un signe « alpha ») pour supprimer un item sur lequel le système focalise (l'item « actif » en langage informatique).

Dans un autre domaine applicatif tel que le sport, on pourra reconnaître et compter certains gestes techniques comme le coup droit ou le revers du tennis, à des fins d'analyses statistiques de match par exemple. On pourra également étudier le profil d'un geste réalisé par rapport à un geste technique idéal ou modèle et analyser les écarts, (notamment la phase du geste où le geste réalisé s'éloigne du modèle), de manière à cibler où se trouve le défaut dans le geste (une saccade au moment de la frappe de balle par exemple). Dans ces cas d'applications, le sportif portera à des emplacements judicieusement choisis des capteurs du type du MotionPod™. Un MotionPod comporte un accéléromètre tri axe, un magnétomètre tri axe, une capacité de prétraitement permettant de préformer des signaux à partir des capteurs, un module de transmission radiofréquence des dits signaux au module de traitement lui-même et une batterie. Ce capteur de mouvement est dit « 3A3M » (trois axes d'accéléromètre et trois axes de magnétomètre). Les accéléromètres et magnétomètres sont des micro capteurs du commerce de faible encombrement, de faible consommation et à bas coût, par exemple un accéléromètre trois voies de la société Kionix™ (KXPA4 3628) et des magnétomètres d'HoneyWell™ de type HMC1041Z (1 voie verticale) et HMC1042L pour les 2 voies horizontales. D'autres fournisseurs existent : Memsic™ ou Asahi Kasei™ pour les magnétomètres et STM™, Freescale™, Analog Device™ pour les accéléromètres, pour ne citer que ceux là. Dans le MotionPod, pour les 6 voies signal, il n'y a qu'un filtrage analogique et ensuite, après conversion analogique numérique (12 bits), les signaux bruts sont transmis par un protocole radiofréquence dans la bande Bluetooth™ (2,4GHz) optimisé pour la consommation dans ce type d'applications. Les données arrivent donc brutes à un contrôleur qui peut recevoir les données d'un ensemble de capteurs. Elles sont lues par le contrôleur et mises à disposition des logiciels. La cadence d'échantillonnage est réglable. Par défaut, elle est fixée à 200 Hz. Des valeurs plus élevées (jusqu'à 3000 Hz, voire plus) peuvent néanmoins être envisagées, permettant une plus grande précision dans la détection de chocs par exemple.

Un accéléromètre du type ci-dessus est sensible aux déplacements longitudinaux selon ses trois axes aux déplacements angulaires (sauf autour de la direction du champ de gravitation terrestre) et aux orientations par rapport à un référentiel cartésien en trois dimensions. Un ensemble de magnétomètres du type ci-dessus permet de mesurer l'orientation du capteur auquel il est fixé par rapport au champ magnétique terrestre et donc des orientations par rapport aux trois axes du référentiel (sauf autour de la direction du champ magnétique terrestre). La combinaison 3A3M fournit des informations de mouvement complémentaires et lissées.

Le même type de configuration est utilisable dans un autre domaine applicatif, celui du jeu vidéo. Dans ce cas, les gestes permettent une immersion plus importante et bien souvent demandent à être reconnus au plus tôt. Par exemple, on reconnaîtra un crochet du droit en boxe avant même la fin du geste ; le jeu déclenchera rapidement l'action à entreprendre dans le monde virtuel.

Une version du MotionPod™ embarque également deux composants à micro gyromètre (2 axes de rotation dans le plan du circuit et 1 axe de rotation orthogonal au plan du circuit). L'adjonction de ce type de capteur est riche. Elle permet des prétraitements typiques des centrales inertielles (IMU en anglais pour Inertial Measurement Unit), traitements qui permettent de fournir une mesure d'angle dynamique. La combinaison 3A3M3G (G pour Gyromètre) fournit des informations de mouvement complémentaires et lissées, même pour des mouvements rapides ou en présence de métaux ferreux perturbateurs du champ magnétique. Pour ce type d'implémentation, un prétraitement avantageux consiste à résoudre l'orientation du capteur pour estimer l'accélération de mouvement et remonter à la position par double intégration. Cette position représente la trajectoire du geste, donnée plus facile à classifier.

Dans l'univers du téléphone mobile, les gestes sont relativement plus simples pour faciliter l'usage ; il s'agit de tapoter sur la mécanique du téléphone et de reconnaître ces signatures, ou bien d'effectuer des translations dans toutes les directions ou encore de reconnaître le geste du décroché ou du raccroché. Néanmoins, si le téléphone mobile embarque ce type de capteurs capables de gérer le pointage, la description des modes d'utilisation rejoint celle du domaine applicatif du multimédia (voir plus haut) où le téléphone mobile est utilisé en lieu et place des télécommandes ou des souris.

On voit donc que la gamme d'applications possibles pour le système de l'invention est très large. Différents capteurs peuvent être utilisés. L'invention permet d'adapter les traitements aux capteurs utilisés et aux scénarios d'emploi, en tenant compte de la précision de la reconnaissance souhaitée.

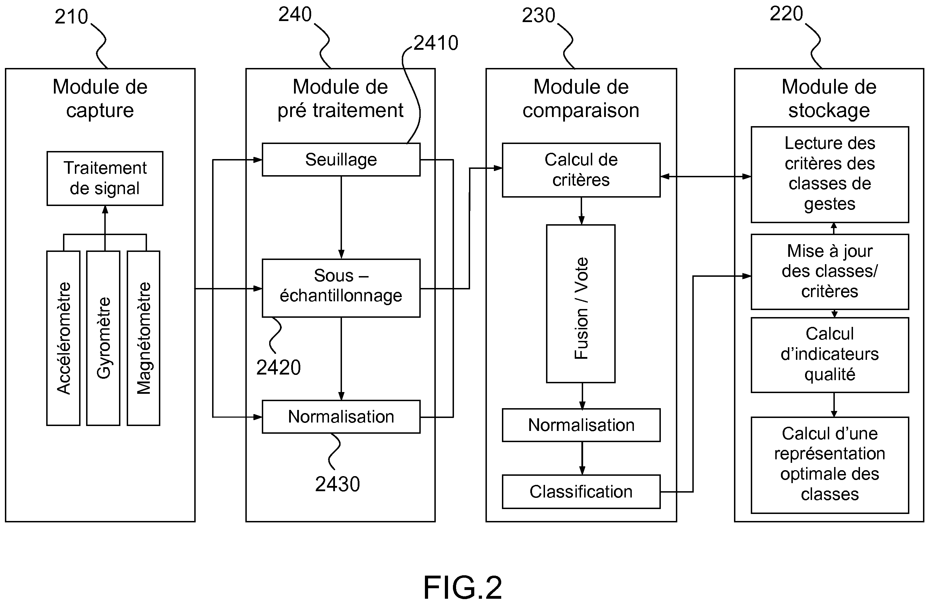

La figure 2 est un schéma d'architecture générale du système de l'invention dans un de ses modes de réalisation.

Un système de reconnaissance de gestes selon l'invention comprend :

- un module 210 de capture de signaux générés par des mouvements d'une entité portant des capteurs ;
- un module 220 de stockage de signaux préalablement capturés organisés en classes de gestes ;
- un module 230 de comparaison d'au moins une partie des signaux capturés sur une plage temporelle avec lesdites classes de signaux stockés ;
- un module 240 de prétraitement d'au moins une partie desdits signaux capturés sur une plage temporelle.

Nous avons donné ci-dessus en commentaire à la figure 1 des exemples de modes de réalisation relatifs au module 210, qui comprend généralement au moins un dispositif sensible 130. Avantageusement, les dispositifs sensibles 130 sont de type 3A3G (accéléromètre 3 axes et gyromètre 3 axes) ou de type 3A3M (accéléromètre 3 axes et magnétomètre 3 axes) ou 3A3G3M (accéléromètre 3 axes, gyromètre 3 axes et magnétomètre 3 axes). Les signaux seront en général transmis à un contrôleur par radio (liaison Wi-Fi ou Bluetooth avec utilisation éventuelle d'une couche spécifique de protocole applicatif optimisée pour la transmission de signaux capturés par des capteurs de mouvement).

Les modules 220 et 230 sont caractéristiques de la classe d'applications de reconnaissance par classification à laquelle l'invention se rattache. En effet, comme la reconnaissance de parole ou d'écriture, la reconnaissance de gestes tire avantage d'un apprentissage qui permet de créer des classes de formes de signaux représentatifs d'un geste donné. Plus le domaine d'application est large et plus le nombre d'utilisateurs dont les gestes sont à reconnaître est élevé, plus la classification apporte d'avantages en termes de qualité de la reconnaissance.

On va pouvoir détecter l'occurrence d'un geste 120 exécuté par l'entité 110 parmi une base de gestes préalablement déterminés. On appelle dictionnaire de gestes, ou module de stockage 220, cette base de gestes de référence préalablement déterminée. L'action d'introduire un nouveau geste dans le dictionnaire 220 est appelée « enrichissement ». L'action de reconnaître si un geste exécuté figure dans le dictionnaire 220 ou pas est appelée « reconnaissance » si le geste est présent ou « rejet » si le geste est absent. Les capteurs embarqués mesurent une signature représentative du geste effectué. Le problème technique général qui est posé est un problème de reconnaissance (ou de classification): il s'agit d'associer cette information de mesure reçue par le système à la classe à laquelle appartient le geste effectué. Une classe peut comporter une ou plusieurs réalisations du geste à apprendre. Les réalisations dans une même classe peuvent varier selon le contexte ou l'utilisateur. Lorsqu'on veut réaliser un système chargé de classifier, plusieurs problèmes techniques spécifiques peuvent se poser :

- La pertinence des données en entrée qui, pour être améliorée, peut éventuellement nécessiter des prétraitements ;
- La vitesse d'exécution du geste qui varie à chaque réalisation.
- La robustesse de la reconnaissance qui permet de s'assurer qu'un geste appartenant au dictionnaire de gestes est bien reconnu et affecté à la bonne classe (probabilité de non détection faible ou taux de reconnaissance élevé) et d'écarter les gestes qui ne font pas partie de la base apprise (probabilité de fausse alarme) et de minimiser le nombre de gestes affectés à une mauvaise classe (taux de faux positifs faible);
- Le temps de réponse du système et le coût de calcul ;
- Le nombre de gestes à reconnaître et le nombre de réalisations de ces gestes à prévoir pour l'enrichissement ;
- La robustesse pour traiter plusieurs utilisateurs ;
- La faculté de gérer les variantes d'un même geste (ex : un geste de faible amplitude et le même geste ayant une grande amplitude, ou un geste effectué dans un sens particulier et le même geste effectué dans un sens différent) ;
- La faculté de gérer la reconnaissance du geste au fil de l'eau sans avoir besoin d'indiquer les instants de démarrage et/ou de fin du geste.

La problématique de reconnaissance d'une forme qui se réalise selon une durée inconnue a priori est étudiée depuis les débuts de la reconnaissance de la parole où l'on souhaitait reconnaître des phonèmes et des mots prononcés [voir « Automatic speaker verification: A review » (A E Rosenberg, 1976) et « Fundamentals of Speech Récognition » (B-H Juang, 1993)]. La reconnaissance de geste hérite du problème identique : un même geste peut être réalisé à des vitesses et des amplitudes différentes. Les solutions de traitement se sont appuyées sur des méthodes permettant d'étirer et de dilater les signaux dans le temps afin de les faire coïncider au maximum avec la forme apprise. L'algorithme DTW fait partie de cette classe de traitements et a été d'abord appliqué pour la reconnaissance de la parole [voir « Performance tradeoffs in dynamic time warping algorithms for isolated word recognition » (C. Myers, L. Rabiner, A. Rosenberg, 1980)]. La possibilité de reconnaître des gestes détectés par des capteurs de type accéléromètres a également été étudiée dans les années 90 [voir « Dynamic Gesture Recognition Using Neural Networks; A Fundament for Advanced Interaction Construction », (K. Boehm, W. Broll, M. Sokolewicz, 1994)]. La combinaison de gyromètres a également été étudiée un peu plus tardivement [voir notamment le brevet EP 0 666 544 B1, Gesture input method and apparatus, (publié en août 1995 et délivré en juillet 2002 à Canon) ; la demande internationale WO2003001340 A2, Gesture recognition system and method. (publiée en janvier 2003 et abandonnée sans entrée en phase nationale) ; le rapport intitulé « Project EMMU : Emotional, Motional Measurement Unit » (CSIDC Seoul national Univ., Jun Keun Chang, 2003) ; la publication « *Workshop on Sensing and Perception for Ubiquitous Computing »,* (part of UbiComp, 2001, September 2001) ainsi que le brevet et la publication de Microsoft cités dans l'introduction à la présente description]. Le brevet Canon décrit un dispositif porté principalement par la main et comparant des signaux mesurés (différence entre capteurs) avec des signaux de référence (dictionnaire). Ce brevet ne divulgue ni moyens de comparaison particuliers ni moyens de prétraitement. Les publications et brevets relatifs à la Xwand de Microsoft ont étudié l'adéquation de la méthode DTW pour établir la fonction de reconnaissance de gestes. Ils décrivent l'utilisation originelle de la XWand pour des environnements de perception en domotique (pointage d'objets en 3D). La XWand est une « baguette magique » électronique comportant des accéléromètres, des magnétomètres, des gyromètres et des boutons de commande, un organe de transmission sans fil, une diode IR, un microcontrôleur. La publication Wilson explique que des méthodes comme DTW peuvent apporter des solutions à la reconnaissance des gestes. Les auteurs comparent les performances de trois algorithmes particuliers (LTW, DTW et HMM). Les résultats indiquent que la méthode la plus efficace est la méthode HMM avec 90 % de reconnaissance, contre 72% pour DTW.

L'objectif que se sont fixés les inventeurs est d'atteindre, pour des applications jeu/multimédia, 95% de probabilité de détection d'un geste et moins de 3% de taux de faux positifs.

On verra plus loin dans la description que ces objectifs ont été atteints, y compris avec plusieurs utilisateurs.

En outre, un des avantages des méthodes utilisant un algorithme de type DTW, qui peut pour certaines applications les faire préférer aux méthodes de type HMM, est qu'elles sont « auto apprenantes », c'est-à-dire qu'il suffit, en règle générale , d'enrichir le dictionnaire de gestes sans qu'il soit nécessaire de régler des pondérations. Selon les applications cependant, la mise en oeuvre des algorithmes de type DTW sera plus gourmande en puissance de calcul que la mise en oeuvre des algorithmes de type HMM.

Le fonctionnement précis selon l'invention des modules 220 et 230 sera détaillé plus loin dans la description.

Le module 240 comprend des fonctions de prétraitement qui permettent de préparer les signaux capturés pour optimiser la reconnaissance, lesdites fonctions étant également décrites de manière détaillée dans la suite de la description.

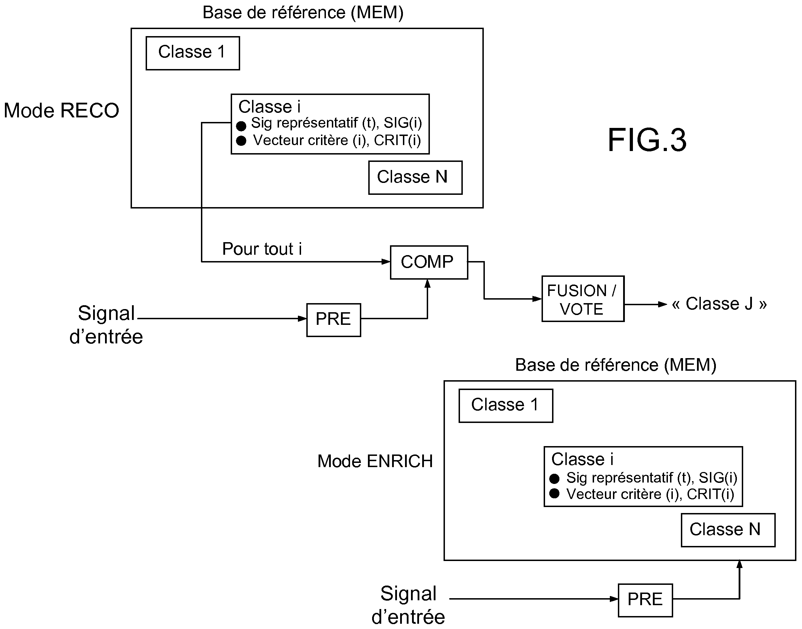

La figure 3 est un organigramme général des traitements pour mettre en oeuvre l'invention dans un de ses modes de réalisation.

Le système de reconnaissance de geste de l'invention peut alternativement ou à la demande enrichir la base ou reconnaître/rejeter un geste. L'utilisateur doit préciser s'il travaille en mode enrichissement ou en mode reconnaissance. On peut également, pour certains gestes se situant à des frontières de classes voisines, envisager de fonctionner simultanément en mode reconnaissance et en mode enrichissement. Dans ce cas, on prévoira avantageusement une interface accessible à un utilisateur qui ne soit pas un administrateur du système pour pouvoir donner facilement confirmation ou infirmation d'une affectation à une classe pendant le déroulement de l'exploitation opérationnelle du système.

Dans le mode reconnaissance, RECO, la solution complète est une chaîne de traitements composée de plusieurs blocs fonction :

- Un module de prétraitement PRE, 240 agissant sur les signaux d'entrée. Ce module peut être configuré de manière identique pour toutes les classes ou être configuré de manière spécifique pour une ou plusieurs classes ;
- Un module de comparaison COMP, 230 des signaux d'entrée pré traités avec des signaux de référence ayant subi les mêmes prétraitements. Ce module fournit un indicateur représentant la similitude entre le signal représentatif du geste à reconnaître et les signaux représentatifs des gestes de référence ;

Ce module de comparaison comporte un bloc de FUSION qui permet de sélectionner la meilleure solution et/ou rejeter un geste qui ne fait pas partie du vocabulaire de gestes appris. La sélection peut s'opérer par exemple par calcul d'une fonction de sélection par optimisation d'un critère de choix ou par vote entre solutions calculées en sorties des différentes modalités de capteurs disponibles.

Dans le mode enrichissement ENRICH, le système de l'invention met en oeuvre une chaîne de traitements qui utilise différentes fonctions:

- du module de prétraitement PRE, 240 sur le signal d'entrée à stocker ;
- du module de stockage MEM, 220 où sont stockés les signaux prétraités SIG(i) ainsi qu'un vecteur critère CRIT(i) associé à la classe, i étant le numéro de la classe ; il peut y avoir enrichissement de la référence stockée par une classe nouvelle ou enrichissement d'une classe existante par le nouveau signal.

Pour initialiser la base d'exemples, il est nécessaire d'introduire un premier exemple d'un premier geste en mode manuel. On pourra passer en mode automatique ou semi-automatique à partir du moment où on disposera dans la base d'au moins un exemple de geste. Les critères initiaux de rejet ou d'acceptation peuvent être fixés à une valeur judicieusement choisie, le mode enrichissement permettant un ajustement progressif de cette valeur. Le module de prétraitement 240 peut exécuter trois fonctions de préparation des signaux dans les deux modes de fonctionnement ENRICH et RECO. Chacune de ces fonctions de préparation peut être mise en oeuvre ou pas selon le contexte d'emploi du système. On peut envisager que l'une d'entre elles soit activée ou désactivée de manière automatique dans certaines plages de fonctionnement:

- une fonction d'élimination des parties des signaux non utiles ou de découpage du signal utile (les performances sont avantageusement accrues en ôtant les périodes d'inactivité avant et après le geste proprement dit) ; les périodes d'inactivité peuvent être identifiées en utilisant les variations du signal observé ; si ces variations sont suffisamment faibles pendant un temps suffisamment long on considère qu'il s'agit d'une période d'inactivité ; il s'agit en quelque sorte d'un seuillage ; ce découpage peut être fait en ligne pour détecter le début et la fin d'un geste (s'il y a des pauses entre les gestes) ; ce seuillage se réalise sur une fenêtre glissante F :

  ∘ Si : var(signal)$_F$ < Th, (Th étant un seuil défini par l'utilisateur), alors la période est inactive, et le signal sur cette période est éliminé ;
  ∘ Le prétraitement peut également comporter un filtrage passe-bas des signaux, tel qu'un filtre de Butterworth ou une moyenne glissante, ce qui permet d'éliminer les variations intempestives liées à un écart par rapport au geste normal.

- une fonction de sous échantillonnage des signaux, éventuellement en sortie de la fonction d'élimination des parties des signaux non utiles, ladite fonction permettant de réduire considérablement le temps de traitement, et pouvant être notamment sous la forme d'une :

  ∘ décimation régulière du signal temporel (avec pré filtrage passe-bas) : en pratique, les systèmes de capture qui sont utilisés dans un mode de réalisation de l'invention étant échantillonnés à 200Hz, il est avantageux d'utiliser un filtrage moyenneur sur des segments, par exemple de 40 points, pour obtenir un signal final échantillonné dans ce cas à 5 Hz, qui est une fréquence particulièrement bien adaptée pour la dynamique des gestes

$$S_m(i) = \frac{1}{2N+1} \sum_{k=-N}^{k=N} S_m(i+k) \; ;$$

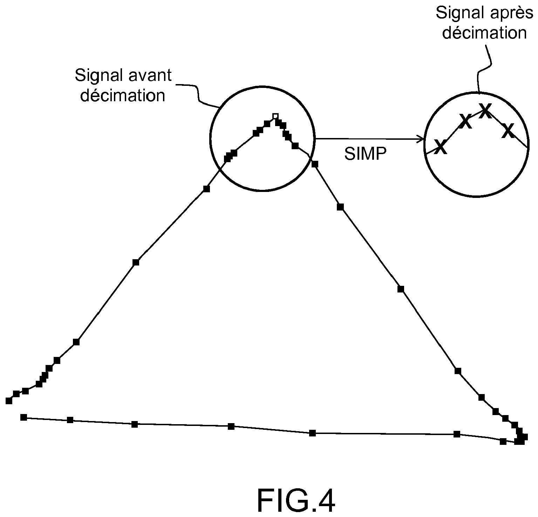

  humains ; le signal moyenné (centré sur la fenêtre) est exprimé par :
  ∘ décimation régulière d'un signal spatial déduit du signal temporel, qui sera donc décimé de manière irrégulière, c'est-à-dire à une fréquence variable comme illustrée sur la figure 4 ; cette fonction réalise une simplification (SIMP) pour adapter les signaux au comportement d'un algorithme de stretching type DTW ; cette simplification consiste à faire progresser une fenêtre le long de la « trajectoire » des signaux en entrée (par exemple une trajectoire dans un espace de dimension 3 si on a un accéléromètre à trois axes comme signal de mesure) ; tous les points contenus dans cette fenêtre réglable sont remplacés par un seul, au barycentre (en temps et en valeur) des échantillons ; puis la fenêtre est déplacée le long de la trajectoire pour continuer de « dégraisser » la densité de points ;
  ∘ ladite décimation étant suivie soit de l'envoi de la séquence de points décimés à la fonction de classification du module de comparaison 230, soit de l'envoi d'une séquence représentative de la densité des signaux accompagné éventuellement de la séquence de points décimés (les points proches trouvés dans cette fenêtre glissante sur la trajectoire génèrent un échantillon de la séquence de points décimés et le nombre de ces points est une mesure de la densité des signaux (voir figure 4) qui peut être discriminante pour le geste à reconnaître);

- Une fonction de normalisation du signal (dite normalisation par réduction) qui peut éventuellement être exécutée en sortie de la fonction de sous échantillonnage ; lorsqu'elle est mise en oeuvre, cette fonction consiste à diviser les signaux, en sortie de cette fonction de sous-échantillonnage, par leur énergie (l'énergie des signaux étant la moyenne des carrés de ces signaux), cette normalisation permet alors de s'affranchir de la dynamique des signaux, selon la formule suivante :

$$Out_{reduit}(i) = \frac{Out(i)}{\sqrt{\dfrac{1}{N}\sum_{k=0}^{k=N}\left[Out(k)\right]^2}}$$

- Selon une variante, la fonction de normalisation peut consister à centrer puis, réduire les signaux issus des capteurs d'accélération, c'est-à-dire que pour chaque signal, selon un mode de réalisation de l'invention, nous leur ôtons leur moyenne (calculée sur la longueur du signal complet représentatif du geste) et nous divisons les signaux en sortie de cette première normalisation par leur écart type, pour réaliser une deuxième normalisation ; ces normalisations permettent alors d'homogénéiser des gestes identiques faits avec des dynamiques différentes, selon les formules suivantes :

$$Out_{centré}(i) = Out(i) - \frac{1}{N+1}\sum_{k=0}^{k=N} Out(k)$$

$$Out_{réduit}(i) = \frac{Out_{centré}(i)}{\sqrt{\frac{1}{N}\sum_{k=0}^{k=N}\left[Out(k) - \frac{1}{N+1}\sum_{l=0}^{l=N} Out(l)\right]^2}}$$

-

Le module de stockage MEM, 220 gère la base de références soit lors de l'ajout de gestes dans la base, soit lorsque l'on veut optimiser la base existante.

En mode ENRICH ou enrichissement, lors de l'ajout d'un geste dans une classe existante i ou lors de la création d'une nouvelle classe par l'ajout d'un ou de plusieurs gestes représentatifs de cette nouvelle classe, nous mettons à jour le vecteur CRIT(i) qui contient notamment, pour chaque classe i:

-	une distance intra classe égale à la moyenne de toutes les distances 2 à 2 des gestes de ladite classe i ;
-	un ensemble de valeurs de distances interclasse, chaque valeur de distance entre la classe i et la classe j étant égale à la moyenne de toutes les distances entre un élément de la classe i et un élément de la classe j.

Les distances intra classe et interclasse sont calculées comme indiqué plus loin dans la description pour le mode reconnaissance RECO.

L'évolution de ces critères donne une information sur la qualité du nouveau geste ou de la nouvelle classe par rapport à la base de référence existante : si la distance intra classe croit trop en parallèle d'une diminution trop importante des distances interclasse, selon un mode de réalisation de l'invention, il est possible d'informer l'utilisateur de la dégradation de la base de références.

Selon un mode de réalisation de l'invention, si l'on veut optimiser la base existante, dans les cas où il y a de nombreux signaux par classe, il est possible de réduire le nombre de ces signaux en choisissant des représentants optimaux :

-	soit nous calculons un ou des représentants « moyens » qui correspondent aux centres des classes ; la distance d'un nouvel exemple par rapport à l'exemple moyen de la classe i éventuellement divisé par la distance intra classe associée et contenue dans CRIT(i) donnera un indicateur pertinent de son appartenance à la classe i ; dans le cas où l'on calcule plusieurs représentants moyens, ceux-ci peuvent être avantageusement choisis pour représenter des différentes manières de réaliser un même geste, notamment dans le cas où le système est destiné à être utilisé par plusieurs utilisateurs.
-	soit nous calculons des représentants « frontières » qui définissent au mieux les frontières entre les classes. Un nouvel élément sera alors associé à la classe de la zone dans laquelle il se trouve. Cette méthode est adaptée lorsque la base d'exemples est très importante et que les frontières entre les classes sont complexes.

Dans le mode de reconnaissance RECO, le module de comparaison 220 exécute les fonctions qui sont décrites ci-dessous.

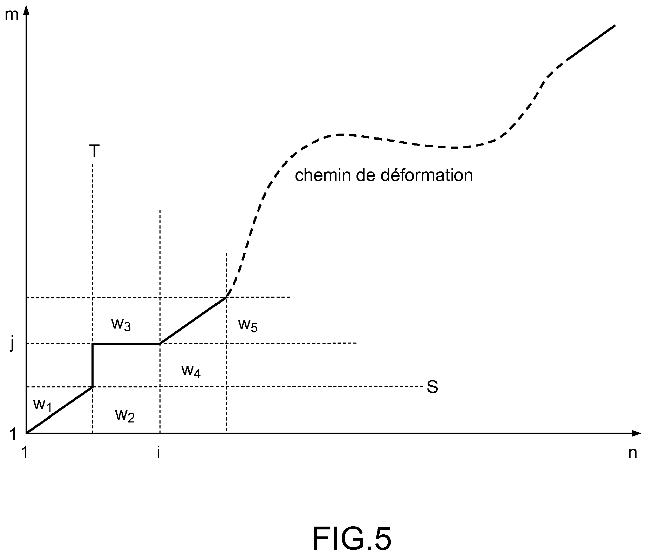

Une fonction de comparaison, COMP fournit un vecteur de coût entre le geste à classifier et les signaux de la base de référence. Les coûts sont issus d'une minimisation de distances entre 2 signaux déterminée par l'algorithme DTW, et fournissent l'erreur quadratique ou la distance, ou le coût entre les 2 signaux comparés, selon l'une de plusieurs formules classiques qui sont indiquées ci-dessous en commentaire à la figure 5. Ce coût peut être de plusieurs natures en fonction des capteurs dont nous disposons, des traitements du bloc FUSION qui sont effectivement utilisés en fonction du mode de réalisation de l'invention choisi, en fonction de l'application et des performances à privilégier (taux de reconnaissance / taux de faux positifs) :

-	si nous avons une seule modalité (accéléromètres à trois axes ou gyromètres à trois axes), nous pouvons calculer le coût entre le signal tri axe à classifier et un des signaux de la base de référence : ce coût fait intervenir des distances euclidiennes de dimension 3, et permet ainsi de ne travailler que sur une matrice de distances, ce qui réduit avantageusement le temps de traitement (par comparaison au calcul d'un coût par voie de capteur, qui multiplie le nombre d'opérations) ;

- si nous avons accès aux deux modalités, nous pouvons alors :

  ○ calculer le coût DTW du signal à 6 dimensions (vecteur contenant les informations des trois axes de l'accéléromètre concaténées aux informations des trois axes du gyromètre) ;
  ○ calculer un coût fusionné : notre coût final est alors le produit des 2 coûts (un coût par modalité) : cette option permet de profiter avantageusement des caractéristiques complémentaires de chaque modalité de capture et de les combiner ;
  ○ fournir au bloc FUSION le couple de coûts (coût de l'accéléromètre et coût du gyromètre) ;
  ○ calculer un coût favorisant une des modalités ; par exemple le chemin du DTW est calculé sur une des modalités (la plus pertinente), le coût de l'autre modalité étant calculé sur ce chemin (pour renforcer ou non le coût de la première modalité) ; on peut alors comme précédemment, fournir le produit des coûts ou le couple des coûts.

La combinaison d'une troisième (ou d'une quatrième...) modalité peut se faire de la même manière : les techniques décrites ci-dessus se généralisent à plus de 2 modalités. Si on a N signaux fournis par M modalités (dans le cas de 3a3m3g cela fait 9 signaux pour 3 modalités) on peut :

  ○ calculer le coût DTW du signal à N dimensions ;
  ○ calculer un coût fusionné : notre coût final est alors le produit des M coûts (un coût par modalité) : cette option permet de profiter avantageusement des caractéristiques complémentaires de chaque modalité de capture et de les combiner ;
  ○ fournir au bloc FUSION l'ensemble des M coûts ;
  ○ calculer un coût favorisant une des modalités ; par exemple le chemin du DTW est calculé sur une des modalités (la plus pertinente), le coût de l'autre modalité étant calculé sur ce chemin (pour renforcer ou non le coût de la première modalité) ; on peut alors comme précédemment, fournir le produit des coûts ou le couple des coûts.

Un post-traitement facultatif consiste à normaliser les coûts obtenus en fonction des critères des classes. Il est défini de la façon suivante : pour le calcul du coût entre le geste à classifier et une classe i, nous définissons le coût relatif comme le rapport entre le coût absolu précédemment calculé et la distance intra classe de la classe i (disponible dans le vecteur CRIT(i)). Ainsi, ce coût tient compte des caractéristiques géométriques des classes (leur étalement, la répartition de leurs éléments).

Pour s'affranchir de l'orientation du capteur par rapport au champ de référence (par rapport au nord pour les magnétomètres, par rapport à la verticale pour les accéléromètres si les accélérations propres sont faibles ou si elles ont la même orientation dans le repère global), on peut choisir une distance particulière qui correspond à la dérivée du produit scalaire des deux signaux à comparer.

Une fonction FUSION ou classification fournit la décision de classification pour le geste testé. Notre algorithme de décision se base uniquement sur la classe du plus proche voisin détecté (le plus proche voisin étant celui qui fournit le coût le plus faible). Une variante est de choisir la classe des k plus proches voisins, si l'on dispose et stocke dans le module de stockage MEM plusieurs exemples de chaque classe, ce qui a un impact défavorable sur les temps de calcul du DTW. Plusieurs modes de réalisation sont possibles en fonction des variantes de configuration expliquées plus haut pour le bloc COMP :

- Si nous avons des coûts scalaires (coût de l'accéléromètre seul, coût du gyromètre seul, ou coût fusionné), nous avons alors un plus proche voisin :

  ○ Soit nous décidons d'attribuer le geste testé à la classe du plus proche voisin quelle que soit la valeur du coût optimal, il n'y a alors pas de classe de rejet : ceci nous permet d'avoir un taux de reconnaissance maximal, mais un taux de fausse alarme complémentaire ;
  ○ Soit nous mettons en place un seuil de décision : au-delà de ce seuil, nous attribuons le geste à une classe de rejet, en deçà de ce seuil, le geste est attribué à la classe du plus proche voisin ; pour le réglage du seuil, il est alors judicieux d'utiliser les coûts relatifs expliqués précédemment, et nous pouvons optimiser cette valeur de seuil selon le compromis taux de reconnaissance/taux de fausse alarme voulu.

- si nous avons des couples de coûts, nous avons une plus proche classe par coût et nous comparons alors les classes obtenues : si ce sont les mêmes classes, nous attribuons le geste à cette classe ; sinon nous plaçons le geste dans une classe de rejet ; cette méthode permet d'obtenir une classe de rejet sans gestion de paramètres de seuil.

La figure 4 illustre une des étapes d'une modalité de prétraitement dans un des modes de réalisation de l'invention.

Cet aspect du prétraitement, relatif au sous échantillonnage mettant en oeuvre une fonction de simplification SIMP, mis en oeuvre dans un mode de réalisation de l'invention, a déjà été commenté et expliqué dans un passage antérieur de la description.

La figure 5 illustre la mise en oeuvre d'un traitement de comparaison de signaux représentatifs de gestes par application d'un algorithme DTW.

Les coûts ou distances entre échantillons de signaux sont calculés de la manière qui est expliquée ci-dessous.

Soient deux suites temporelles S et T d'échantillons de signaux, S étant par exemple un signal de mesure et T un signal de référence:

$$S = s_1, s_2, ..., s_i, ... s_n$$

$$T = t_1, t_2, ..., t_j, ... t_m$$

En fixant des conditions aux limites pour chaque échantillon (coïncidence des dates de début et des dates de fin), les séquences S et T peuvent être arrangées pour former une grille n par m dans laquelle chaque point de la grille (i, j) correspond à un couple $(s_i, t_j.)$. La grille est représentée sur la figure 5. On définit une fonction w sur le domaine de la grille pour transformer les échantillons du signal de mesure dans l'échelle de temps du signal de référence. Plusieurs fonctions w peuvent être définies. On trouvera des exemples notamment dans « Minimum Prediction Residual Principle Applied to Speech Récognition » - (Fumitada Ikatura, IEEE Transactions on Acoustics, Speech and Signal Processing, Février 1975) et « Considerations in Dynamic Time Warping Algorithms for Discrete Word Récognition » - (L.R. Rabiner, A.E. Rosenberg, S. Levinson, IEEE Transactions on Acoustics, Speech and Signal Processing, Décembre 1978). On définit ainsi une troisième suite W :

$$W = w(s_1), w(s_2), ..., w(s_k), ... w(s_p)$$

Il s'agit de trouver le chemin constitué par les couples $(w(s_i), t_j)$ qui maximise un indicateur de similarité ou minimise la distance entre les deux échantillons.

Pour formuler le problème de minimisation, on peut utiliser plusieurs formules de calcul de distance, soit une valeur absolue de l'écart entre les points des suites S et T, soit le carré de l'écart entre lesdits points.

$$\delta(i, j) = \left| s_i - t_j \right|$$

Ou

$$\delta(i, j) = (s_i - t_j)^2$$

Comme on le verra dans la suite de la description, on peut aussi définir d'autres mesures de distance. La formule à minimiser est dans tous les cas :

$$DTW(S,T) = \min_W \left[ \sum_{k=1}^{p} \delta(w(s_k), t_k) \right]$$

Dans le contexte de l'invention, on appelle l'ensemble des valeurs $\delta(s_i, t_j)$ la matrice des distances de l'algorithme DTW et l'ensemble des valeurs $(\overline{w}(s_k), t_k)$ correspondant au minimum DTW (S,T), le chemin de coût minimum parcourant la matrice des distances.

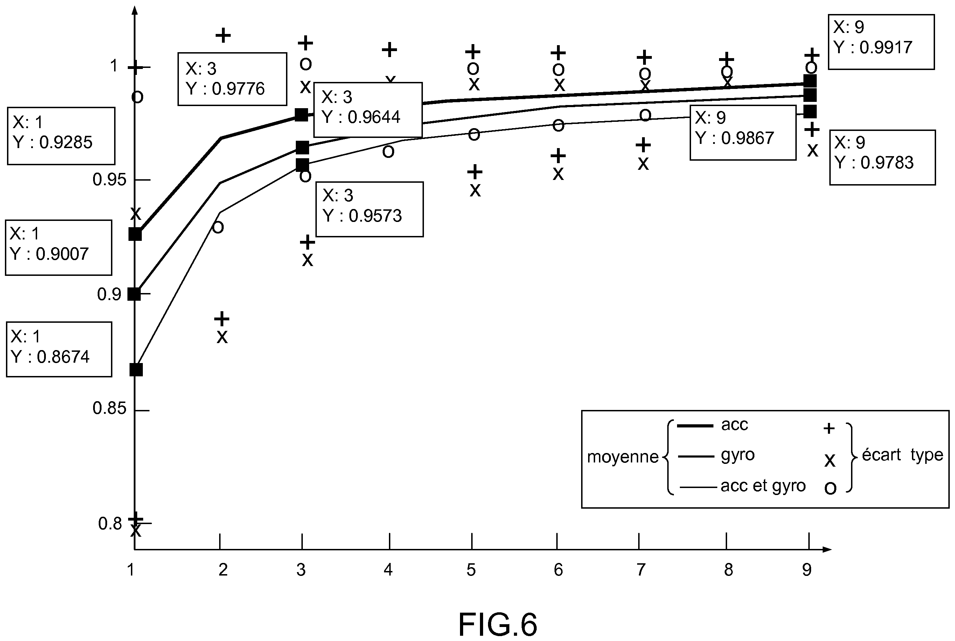

La figure 6 illustre le taux de reconnaissance d'un système de reconnaissance de gestes de l'invention selon une première variante de critère de décision.

Dans cet exemple de réalisation, la base de référence comprend des gestes représentatifs de chiffres. On a 6 utilisateurs différents. On utilise comme indicateur de distance entre signaux le coût absolu défini plus haut dans la description. Les courbes représentent en ordonnée le taux de reconnaissance et en abscisse le nombre de mesures dans chaque classe. Les trois courbes représentent respectivement :

- courbe du bas : cas où seules les mesures du gyromètre sont utilisées ;

- courbe du milieu : cas où seules les mesures de l'accéléromètre sont utilisées ;

- courbe du haut : cas où les mesures des deux capteurs sont utilisées.

La fusion des capteurs permet d'améliorer le taux de reconnaissance dans des proportions modestes.

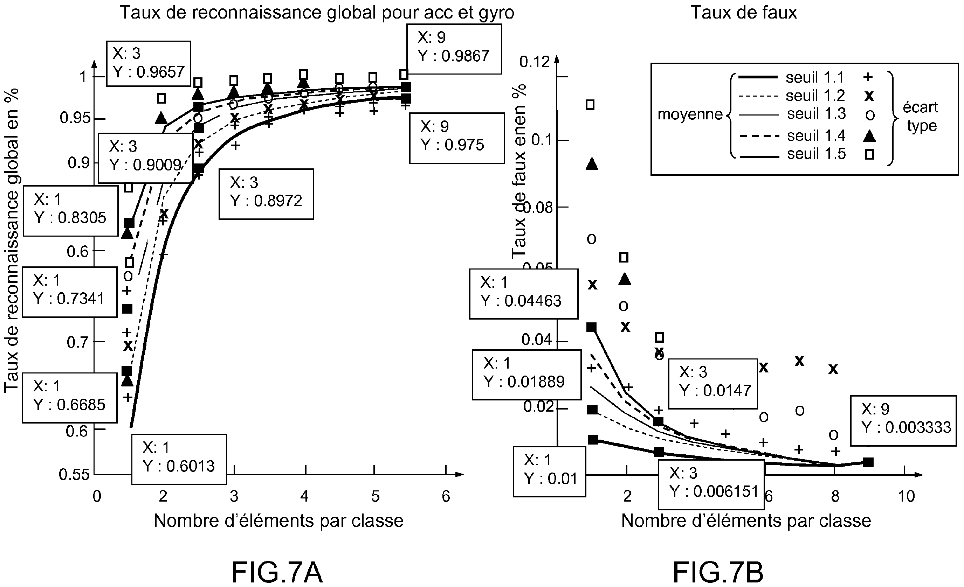

Les figures 7A et 7B illustrent respectivement le taux de reconnaissance et le taux de faux positifs d'un système de reconnaissance de gestes de l'invention selon une deuxième variante de critère de décision.

Dans cet exemple de réalisation, la base de référence comprend également des gestes représentatifs de chiffres et on a également 6 utilisateurs différents. On utilise cette fois-ci comme indicateur de distance entre signaux le coût relatif défini plus haut dans la description. Les courbes des figures 7A et 7B représentent respectivement en ordonnée le taux de reconnaissance et le taux de faux positifs, et en abscisse le nombre de mesures dans chaque classe. Les différentes courbes sur chaque figure représentent des mesures avec des seuils de rejet (du bas vers le haut sur la figure 7A et du haut vers le bas sur la courbe 7B) variant de 1,1 à 1,5 par pas de 0,1 (ie : si le coût relatif de l'instance par rapport à la classe est supérieur à K, l'instance n'appartient pas à la classe.

Les écarts-types sont faibles et les performances sont similaires, ce qui montre que le système de reconnaissance a une bonne robustesse pour des utilisateurs différents. Les écarts entre les courbes pour différents seuils montrent que si l'on veut diminuer le nombre d'erreurs (figure 7B) il faut prendre un seuil faible. On aura par contre un taux de décision qui sera faible aussi (figure 7A). Ce réglage peut être intéressant dans un mode d'enrichissement : lorsqu'aucune décision ne peut être prise, on demande à l'utilisateur de rentrer le numéro de la classe manuellement pour enrichir la base. Il peut être aussi intéressant, lorsque l'on préfère ne pas réaliser l'action que de réaliser une action fausse (par exemple, si un geste sert à identifier la signature d'une personne, il vaut mieux le faire signer une nouvelle fois, que d'ouvrir l'application sans être sûr que c'est bien la bonne personne).

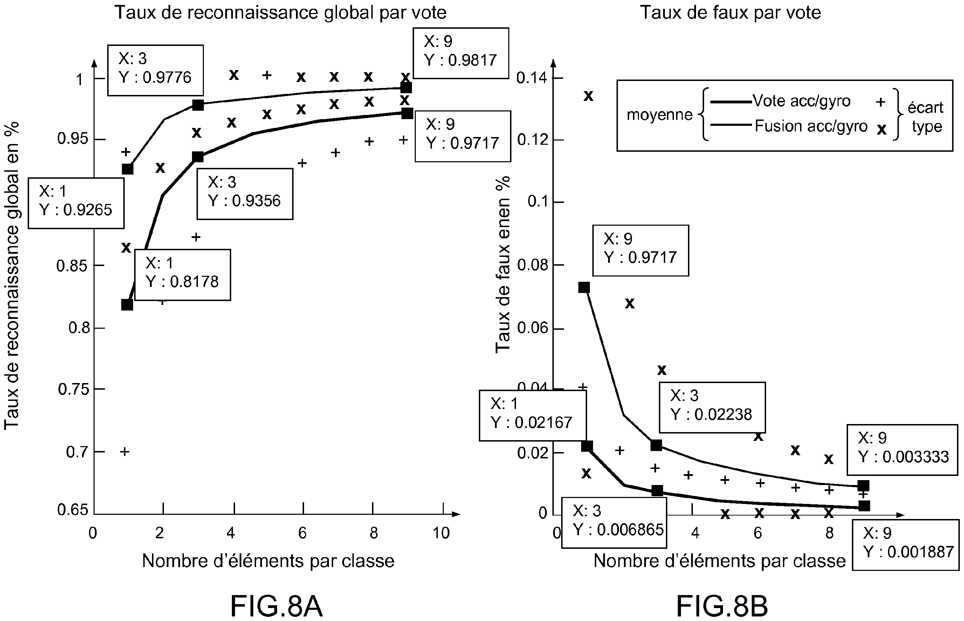

Les figures 8A et 8B illustrent respectivement le taux de reconnaissance et le taux de faux positifs d'un système de reconnaissance de gestes de l'invention selon une troisième et une quatrième variante de critère de décision.

Dans cet exemple de réalisation, la base de référence comprend également des gestes représentatifs de chiffres et on a également 6 utilisateurs différents. On utilise cette fois-ci d'une part une fusion des données de deux capteurs (courbe du haut sur la figure 8A et courbe du bas sur la figure 8B) et d'autre part un vote entre capteurs (courbe du bas sur la figure 8A et courbe du haut sur la figure 8B). On observe que le vote améliore le taux de faux positifs et dégrade le taux de reconnaissance, ce qui montre que le vote est plus « sévère » que la fusion, dans les conditions dans lesquelles ces deux modalités sont mises en oeuvre.

Ces exemples illustrent l'intérêt de disposer de plusieurs modes de réalisation en fonction des scénarios d'emploi de l'invention et du type de performance privilégié. Ces différents modes de réalisation peuvent cohabiter dans un même système et être activés par paramétrage logiciel en fonction des besoins d'utilisation à un moment donné.

L'invention peut être mise en oeuvre sans difficultés sur un ordinateur du commerce auquel sera connecté un module de capture de signaux de mouvements qui disposera normalement des moyens de conditionnement et de transmission desdits signaux à l'ordinateur. Le microprocesseur de l'unité centrale d'un PC de bureau suffit à mettre en oeuvre l'invention. Les logiciels mettant en oeuvre les algorithmes décrits plus haut peuvent être intégrés dans un logiciel applicatif comprenant par ailleurs :

- les bibliothèques de contrôle des fonctions de bas niveau qui réalisent la capture, le conditionnement et la transmission des signaux des capteurs de mouvement ;

- des modules de commande de fonctions (reconnaissance automatique de caractères, commande d'équipements électroniques, jeu d'instrument de musique, simulation d'entraînement sportif, jeu, etc...

Bien entendu le dimensionnement de l'unité centrale conditionnera dans une large mesure les performances du système. Il devra être choisi en fonction des performances attendues au niveau applicatif. En cas de contrainte de performance très élevée en temps de traitement, il peut être envisagé de paralléliser les traitements selon des modalités connues de l'homme du métier. Les choix du processeur et du langage cibles dépendront en grande partie de cette exigence de performances ainsi que des contraintes de coût.

On peut également envisager, pour un nombre de gestes limités à degré d'ambiguïté faible que les algorithmes de reconnaissance soient embarqués dans l'entité portant les capteurs, tous les traitements étant réalisés en local.

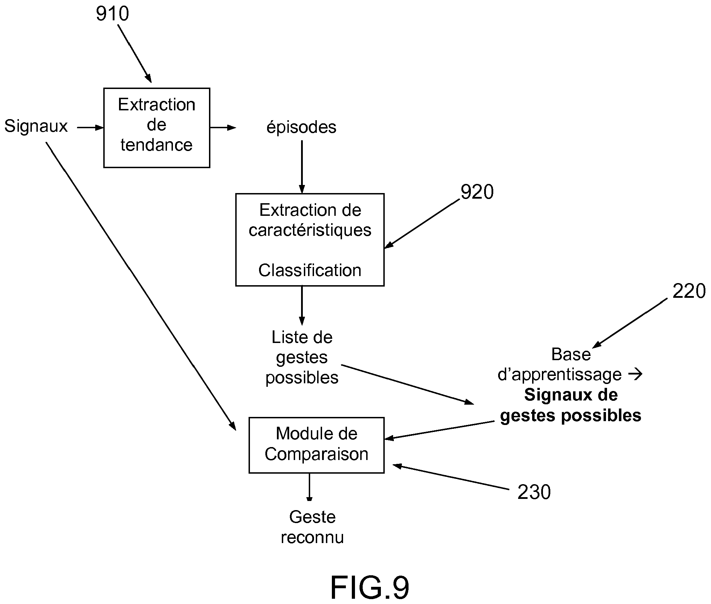

La figure 9 est un organigramme des traitements appliqués dans le cas d'une reconnaissance de gestes, dans certains modes de réalisation de l'invention utilisant une extraction de tendance et/ou une extraction de caractéristiques. Dans certaines hypothèses où les gestes doivent être reconnus, notamment pour commander des dispositifs, il est important de réaliser la reconnaissance dans un temps réduit. L'exécution d'un algorithme de comparaison avec les classes de gestes doit donc être optimisée. Une manière de réaliser cette optimisation est décrite par la figure 9. Un premier traitement a pour objectif d'éviter l'exécution de l'algorithme en présence de gestes non significatifs.

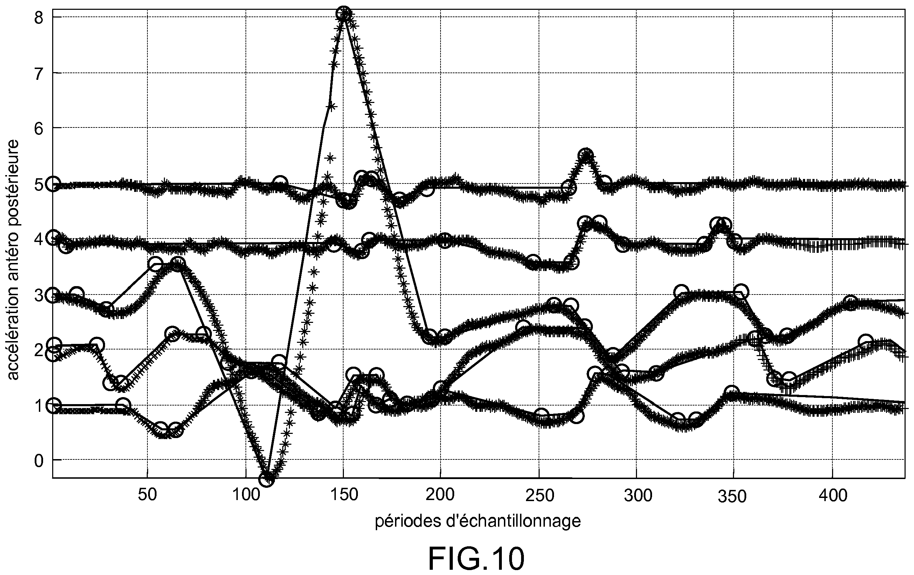

Cet objectif est atteint notamment en analysant les épisodes temporels successifs et en ne commandant l'exécution de l'algorithme du module de comparaison 230 que lorsque ces épisodes comportent une variation des paramètres du signal considérée comme caractéristique d'un geste significatif. Un module d'extraction de tendance 910 est inséré entre le module de prétraitement 210 et le module de comparaison 230 pour effectuer ce traitement. Son fonctionnement est décrit dans la suite de la description en relation avec la figure 10.

Le module d'extraction de tendance peut être disposé avant le module de prétraitement 210 afin de décimer les signaux représentatifs des gestes avant de leur appliquer le ou les prétraitement(s) choisi(s).

En outre, pour accélérer l'exécution de l'algorithme de comparaison, il est avantageux de regrouper les classes du dictionnaire de gestes de référence en utilisant un algorithme de regroupement qui peut être du type algorithme des centres mobiles ou algorithme K-means. Les algorithmes de ce type réalisent un regroupement des classes en clusters dont une grandeur caractéristique est une valeur moyenne des grandeurs caractéristiques des classes regroupées. Un homme de l'art des techniques de classification sait réaliser ce type de regroupement et réaliser le choix de la grandeur caractéristique pour que les clusters soient adaptés à l'application.

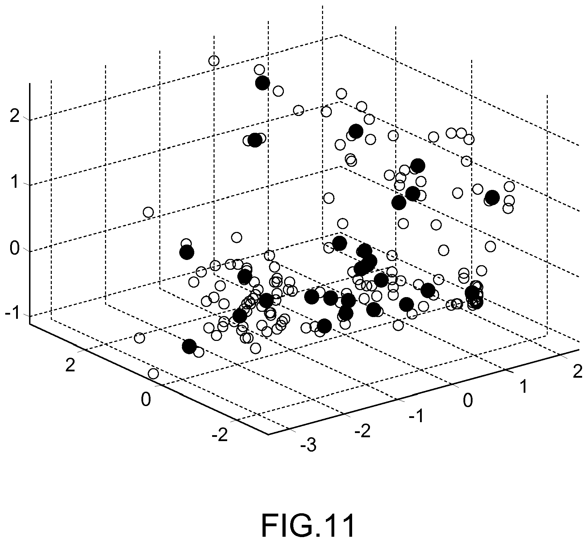

Un module de regroupement de classes 920 est inséré à cet effet dans le système de l'invention. Ledit module permet également de réaliser une première comparaison des signaux représentatifs des gestes analysés auxdits clusters en calculant une distance euclidienne de la grandeur caractéristique du cluster et de la même grandeur dans le signal analysé. Le fonctionnement de ce module est décrit dans la suite de la description en relation avec la figure 11.

La figure 10 illustre le principe de l'extraction de tendance dans certains modes de réalisation de l'invention.

L'algorithme d'extraction de tendance du module 910 extrait, sur un signal, une suite d'épisodes temporels, caractérisés par un instant de début et un instant de fin, la valeur du signal au début et à la fin de l'épisode ainsi qu'une information symbolique sur l'évolution temporelle {croissant, décroissant, stable}. Lorsque l'application utilise plusieurs capteurs accélérométriques répartis sur l'entité dont on veut reconnaître les gestes, l'extraction de tendance peut être appliquée sur tous les signaux d'accélération émanant de capteurs qui mesurent les mouvements dans une même direction. Chaque fois qu'un nouvel épisode est détecté sur la tendance d'un de ces signaux, l'analyse par l'algorithme de comparaison, par exemple du type DTW, est réalisée sur l'ensemble desdits signaux sur une fenêtre temporelle de durée D précédent la détection d'un nouvel épisode. Ceci permet de ne déclencher l'analyse de comparaison que lorsque des variations significatives sont détectées sur un desdits signaux d'accélération.

Un algorithme d'extraction de tendance du type de celui utilisé pour la mise en oeuvre de la présente invention est décrit dans un contexte applicatif différent dans les publications suivantes : S. Charbonnier "On Line Extraction of Temporal Episodes from ICU High-Frequency Data: a visual support for signal interprétation" Computer Methods and Programs in Biomedicine, 78, 115-132, 05 ; S. Charbonnier, C. Garcia-Beltan, C. Cadet, S. Gentil "Trends extraction and analysis for complex system monitoring and decision support" Engineering Applications of Artificial Intelligence Vol 18, n°1, pp 21-36, 05.

Cet algorithme d'extraction de tendance extrait une succession d'épisodes temporels définis par : {primitive, [td, tf[, [yd, yf[}

La primitive peut être stable, croissant ou décroissant.

[td, tf[ exprime l'intervalle de temps au cours duquel l'évolution temporelle du signal suit la primitive. Ces valeurs correspondent à des instants où un changement se produit dans l'évolution du signal.

[yd, yf[ exprime les valeurs du signal au début et à la fin de l'épisode. Lesdites valeurs correspondent aux points de changement de la valeur du signal et notamment aux extrema.

La figure 10 représente 5 signaux d'accélération enregistrés au cours d'un geste (successions de croix approximativement alignées) et la tendance extraite correspondante (courbes en traits pleins reliant les ronds) . Dans cet exemple, l'entité est instrumentée avec 5 axes accélérométriques sensiblement colinéaires dans une direction avant-arrière ou antéro-postérieure.

L'algorithme d'extraction de tendance est réglé par 3 paramètres. La valeur de ces paramètres est identique quel que soit le signal d'accélération. Un des paramètres de réglage permet de définir à partir de quelle valeur une variation du signal est significative. Il est noté « seuil_variation ». Dans un exemple de réalisation pour une application de détection de gestes de boxe, il a été réglé de manière à ce que seules les variations d'amplitude supérieures à 0,6 soient détectées. La tendance n'est pas extraite avec une forte précision mais cela permet de ne pas détecter les variations de faible amplitude et ainsi de ne pas déclencher trop souvent la détection de gestes.

La figure 11 illustre le principe de l'utilisation d'un algorithme de centres mobiles dans certains modes de réalisation de l'invention.

La figure représente la base des gestes de référence (ronds vides) et les noyaux des clusters (ronds pleins) constitués par un algorithme de centres mobiles dans l'espace de leurs trois premières composantes principales.

Les caractéristiques sur la forme du signal, extraites à partir de la tendance, sont fournies à un algorithme de classification (algorithme des centres mobiles) qui détermine les gestes probables effectués. L'algorithme de comparaison (par exemple du type DTW) est ensuite utilisé pour déterminer quel geste a été effectué en comparant les signaux de gestes probables de la base d'apprentissage avec le signal mesuré. L'intérêt de la classification est de réduire le nombre de gestes présents dans la base d'apprentissage à comparer avec le geste en cours.

Le principe de la méthode est décrit par le pseudo-code ci-dessous :

Soit S, le signal à analyser. S contient les 5 accélérations antéro-postérieures. Dans cet exemple, l'entité est instrumentée avec 5 axes accélérométriques sensiblement colinéaires dans une direction avant-arrière ou antéro-postérieure.

Soit X(j).App, un fichier de la base de données contenant un exemple de signaux d'accélération antéro-postérieure enregistrés au cours d'un geste. Pour réaliser l'apprentissage :

- Extraction des caractéristiques des fichiers X(j).App
- Application d'un algorithme de centres mobiles → Obtention de K noyaux. A chaque noyau est associée une liste de gestes possibles.

Pour réaliser la détection de gestes :

A chaque période d'échantillonnage,

Pour chaque signal d'accélération,

Extraction de la tendance
Si un nouvel épisode est détecté,
Mettre le drapeau « geste à analyser » à 1
Fin Si

Fin Pour
Si geste à analyser =1,

Pour chaque signal d'accélération,
Extraction des caractéristiques sur une fenêtre D précédant la détection de l'épisode
Fin Pour

- Calcul de la distance euclidienne entre les caractéristiques centrées réduites extraites et les K noyaux
- Sélection du noyau le plus proche → Proposition d'une liste de gestes possibles. (Si la distance au noyau le plus proche est supérieure à une distance seuil, décision= 0)
- Calcul de la distance DTW entre le signal S et les exemples X(j).App correspondant à la liste de gestes possibles

Si la distance est supérieure à un seuil de rejet,
Décision=0
Sinon
Décision= k, avec k le n° du geste associé au fichier dont la distance DTW est la plus faible
Fin Si

Mettre le drapeau « geste à analyser » à 0
Fin Si

Fin Pour

Avantageusement, le calcul de la distance DTW entre le signal S et les exemples X(j).App est effectué à partir du signal moyenné, sous-échantillonné, par pas de 5 périodes d'échantillonnage.

Pour éviter que deux décisions soient prises à deux instants trop proches, un temps de latence peut être introduit. Une décision est prise si un nouvel épisode est détecté sur un des signaux d'accélération et si le temps séparant de la décision précédente est supérieur à une durée minimale (temps de latence). Le temps de latence peut varier entre 50 et 100 périodes d'échantillonnage, soit 0.25 - 0.5 secondes, l'échantillonnage étant ici de 200Hz. Il est introduit pour pallier le fait que l'algorithme extrait la tendance en ligne sur une variable, sans tenir compte de l'évolution des autres variables. En effet, l'extraction de tendance n'est pas synchronisée. Ainsi, lorsque deux signaux sont corrélés, l'algorithme peut détecter un nouvel épisode sur un premier signal et peu de temps après un épisode sur le 2$^{ème}$ signal, qui correspond en fait au même phénomène. L'introduction du temps de latence permet d'éviter une deuxième extraction.

La méthode de l'invention permet donc de réduire le nombre d'appels à la fonction de comparaison (par exemple du type DTW) :

- en ne déclenchant son appel que lorsqu'un changement significatif sur l'évolution temporelle du signal est détecté
- en diminuant le nombre d'exemples de gestes de la base d'apprentissage à comparer avec les signaux

Les exemples décrits ci-dessus sont donnés à titre d'illustration de modes de réalisation de l'invention. Ils ne limitent en aucune manière le champ de l'invention qui est défini par les revendications qui suivent.

**Revendications**

1. Système de reconnaissance de gestes d'une entité comprenant :

   - un module (210) de capture de signaux générés par lesdits mouvements de ladite entité comprenant un capteur de mesures inertielles selon trois axes,
   - un module (220) de stockage de données représentatives de signaux préalablement capturés organisés en classes de gestes,
   - un module (230) de comparaison d'au moins une partie des signaux capturés sur une plage temporelle avec lesdites classes de signaux stockés,
   - ledit système étant agencé de manière à ce qu'une partie au moins des signaux capturés et des sorties du module de comparaison est fournie en entrées du module de stockage pour y être traitée, les résultats desdits traitements étant pris en compte par les traitements en cours du module de comparaison,
   - ledit système comprenant en outre un module (240) de prétraitement d'au moins une partie desdits signaux capturés sur une plage temporelle, ledit prétraitement comprenant

     ◦ une élimination (2410) par seuillage au sein desdits signaux capturés de ceux correspondant à des périodes d'inactivité,
     ◦ un sous échantillonnage (2420) des signaux capturés et
     ◦ une normalisation (2430) par réduction desdits signaux,

   ledit système étant **caractérisé en ce que** le sous-échantillonnage (2420) est une décimation régulière d'un signal spatial déduit des signaux capturés, ledit signal spatial comprenant une trajectoire ayant un nombre de dimensions égal au nombre d'axes de capture des signaux, la décimation utilisant un rapport de réduction et consistant à remplacer des positions calculées à partir des signaux capturés sur une fenêtre spatiale par leur barycentre.

2. Système de reconnaissance de gestes selon la revendication 1, **caractérisé en ce que** la normalisation comprend un centrage avant la réduction desdits signaux capturés.

3. Système de reconnaissance de gestes selon l'une des revendications 1 à 2, **caractérisé en ce que** ledit module (230) de comparaison des signaux capturés sur une plage temporelle effectue ladite comparaison en exécutant un algorithme de déformation temporelle dynamique.

4. Système de reconnaissance de gestes selon la revendication 3, **caractérisé en ce que** ledit module de stockage comprend, pour chaque classe de signaux, un vecteur de données représentatif d'au moins une mesure de distance des signaux appartenant à chaque classe.

5. Système de reconnaissance de gestes selon la revendication 4, **caractérisé en ce que** le vecteur de données représentatif d'au moins une mesure de distance des signaux appartenant à chaque classe comprend, pour chaque classe de signaux stockés, au moins une mesure de distance intra classe et des mesures de distances entre ladite classe et chacune des autres classes stockées.

6. Système de reconnaissance de gestes selon la revendication 5, **caractérisé en ce que** au moins l'une des mesures de distance intra classe ou interclasses est égale respectivement à la moyenne des distances deux à deux entre signaux de la classe ou entre signaux des deux classes, chaque distance entre signaux représentatifs de gestes appartenant à une classe étant calculée comme le minimum de l'écart quadratique entre suites d'échantillons des signaux sur des chemins de déformation de type DTW.

7. Système de reconnaissance de gestes selon la revendication 3, **caractérisé en ce que** ledit algorithme de déformation temporelle dynamique utilise un critère de reconnaissance du geste représenté par lesdits signaux capturés sur une plage temporelle basé sur une mesure de distance desdits signaux capturés sur une plage temporelle avec le vecteur représentatif des classes de signaux de référence stockés dans ledit module de stockage.

8. Système de reconnaissance de gestes selon la revendication 7, **caractérisé en ce que** ladite mesure de distance est effectuée par calcul par un algorithme de type DTW d'un indice de similarité entre le au moins un signal de mesure et les signaux de référence sur le chemin de coût minimum parcourant une matrice dont les coefficients sont choisis dans un groupe comprenant des distances euclidiennes entre le vecteur dont les composantes sont les mesures des axes du au moins un capteur sur le signal à classer et le vecteur de mêmes composantes sur le signal de référence et les dérivées du produit scalaire du vecteur de mesure et du vecteur de référence.

9. Système de reconnaissance de gestes selon la revendication 7, **caractérisé en ce que** ledit module de capture desdits signaux comprend au moins deux capteurs et **en ce que** ledit système comprend en outre un module de fusion des données issues du module de comparaison pour les au moins deux capteurs ledit module de comparaison étant apte à exécuter une fonction de vote entre lesdites données issues du module de comparaison pour les au moins deux capteurs.

10. Système de reconnaissance de gestes selon la revendication 9, **caractérisé en ce que** ladite mesure de distance est effectuée par une des opérations appartenant au groupe comprenant : i) un calcul par un algorithme de type DTW d'un indice de similarité entre le au moins un signal de mesure et les signaux de référence sur le chemin de coût minimum parcourant une matrice des distances euclidiennes entre le vecteur dont les composantes sont les mesures des axes des au moins deux capteurs sur le signal à classer et le vecteur de mêmes composantes sur le signal de référence, ledit indice de similarité constituant la mesure de distance ; ii) un calcul par un algorithme de type DTW, pour chaque capteur, d'un indice de similarité entre le au moins un signal de mesure et les signaux de référence sur le chemin de coût minimum parcourant une matrice des distances euclidiennes entre le vecteur dont les composantes sont les mesures des axes d'un des au moins deux capteurs sur le signal à classer et le vecteur de même composantes sur le signal de référence, puis un calcul de la mesure de distance par multiplication des indices de similarité fournis en sortie des calculs sur tous les capteurs.

11. Système de reconnaissance de gestes selon la revendication 9, **caractérisé en ce que** ladite mesure de distance est effectuée par un calcul, pour chaque capteur, d'un indice de similarité entre le au moins un signal de mesure et les signaux de référence sur le chemin de coût minimum parcourant une matrice dont les éléments sont les dérivées du produit scalaire du vecteur de mesure et du vecteur de référence, puis un calcul de la mesure de distance par une multiplication des indices de similarité fournis en sortie des calculs sur tous les capteurs.

12. Système de reconnaissance de gestes selon la revendication 9, **caractérisé en ce que** ladite mesure de distance est effectuée par un calcul par un algorithme DTW, pour chaque capteur, d'un indice de similarité entre le au moins un signal de mesure et les signaux de référence sur le chemin de coût minimum parcourant une matrice constituée soit par les distances euclidiennes entre le vecteur dont les composantes sont les mesures des axes d'un des au moins deux capteurs sur le signal à classer et le vecteur de même composantes sur le signal de référence, soit par les dérivées du produit scalaire du vecteur de mesure et du vecteur de référence, puis un calcul de la mesure de distance par multiplication des indices de similarité fournis en sortie des calculs sur tous les capteurs.

13. Système de reconnaissance de gestes selon l'une des revendications 1 à 12, **caractérisé en ce que** le module de prétraitement exécute une fonction d'élimination par seuillage au sein desdits signaux capturés de ceux correspondant à des périodes d'inactivité en filtrant les variations des signaux inférieures à un seuil choisi sur une fenêtre temporelle également choisie.

14. Système de reconnaissance de gestes selon l'une des revendications 1 à 13, **caractérisé en ce qu'**il comprend en outre, en sortie du module de prétraitement (240), un module d'extraction de tendance (910) apte à commander l'exécution du module de comparaison (230).

15. Système de reconnaissance de gestes selon la revendication 14, **caractérisé en ce que** ledit module d'extraction de tendance commande l'exécution du module de comparaison lorsque la variation d'une grandeur caractéristique d'un des signaux capturés sur une plage temporelle dépasse un seuil déterminé.

**16.** Système de reconnaissance de gestes selon l'une des revendications 1 à 15, **caractérisé en ce qu'**il comprend en outre, en entrée du module de stockage (220), un module de regroupement de classes (920) en K groupes de classes représentatifs de familles de gestes.

**17.** Système de reconnaissance de gestes selon la revendication 15 et la revendication 16, **caractérisé en ce que** la commande du module de comparaison déclenche l'exécution d'une fonction de sélection de celui des K groupes dont le signal comparé est le plus proche puis d'un algorithme de déformation temporelle dynamique entre ledit signal comparé et les gestes des classes dudit groupe sélectionné.

**18.** Procédé de reconnaissance de gestes d'une entité comprenant :

- une étape de capture, par un capteur de mesures inertielles selon trois axes, de signaux générés par lesdits mouvements de ladite entité selon au moins trois degrés de liberté,
- une étape de stockage des données représentatives de signaux préalablement capturés organisés en classes de gestes,
- une étape de comparaison d'au moins une partie des signaux capturés sur une plage temporelle avec des classes de signaux stockés au préalable représentatifs de gestes d'entités,
- la fourniture d'une partie au moins des signaux capturés et des sorties de l'étape de comparaison en entrée de l'étape de stockage pour y être traitée, les résultats desdits traitements étant pris en compte par les traitements en cours de l'étape de comparaison,
- ledit procédé comprenant en outre une étape de prétraitement, préalable à l'étape de comparaison, d'au moins une partie desdits signaux capturés sur une plage temporelle, ledit prétraitement comprenant

◦ une élimination par seuillage au sein desdits signaux capturés de ceux correspondant à des périodes d'inactivité,
◦ un sous échantillonnage des signaux capturés et
◦ une normalisation par réduction desdits signaux,

ledit procédé étant **caractérisé en ce que** le sous-échantillonnage est une décimation régulière d'un signal spatial déduit des signaux capturés, ledit signal spatial comprenant une trajectoire ayant un nombre de dimensions égal au nombre d'axes de capture des signaux, la décimation utilisant un rapport de réduction et consiste à remplacer des positions calculées à partir des signaux capturés sur une fenêtre spatiale par leur barycentre.

**Patentansprüche**

**1.** System zum Erkennen von Gesten einer Entität, das Folgendes umfasst:

- ein Modul (210) zum Erfassen von Signalen, die durch die Bewegungen der Entität erzeugt werden, umfassend einen Trägheitsmesssensor entlang drei Achsen,
- ein Modul (220) zum Speichern von Daten, die zuvor erfasste Signale repräsentieren, organisiert in Gestenklassen,
- ein Modul (230) zum Vergleichen wenigstens eines Teils der über einen Zeitraum erfassten Signale mit den Klassen von gespeicherten Signalen,
- wobei das System so ausgestattet ist, dass wenigstens ein Teil der erfassten Signale und der Ausgänge des Vergleichsmoduls, zum Verarbeiten darin, als Eingänge des Speichermoduls bereitgestellt wird, wobei die Ergebnisse der Verarbeitungen bei den laufenden Verarbeitungen des Vergleichsmoduls berücksichtigt werden,
- wobei das System ferner ein Modul (240) zum Vorverarbeiten wenigstens eines Teils der über einen Zeitraum erfassten Signale umfasst, wobei die Vorverarbeitung Folgendes beinhaltet:

◦ Beseitigen (2410), durch Schwellenwertbildung innerhalb der erfassten Signale, von denen, die Inaktivitätsperioden entsprechen,
◦ Unterabtasten (2420) der erfassten Signale, und
◦ Normalisieren (2430) durch Reduktion der Signale,

wobei das System **dadurch gekennzeichnet ist, dass** die Unterabtastung (2420) eine regelmäßige Dezimierung eines von den erfassten Signalen abgeleiteten räumlichen Signals ist, wobei das räumliche Signal eine Bahn mit einer Anzahl von Dimensionen gleich einer Anzahl von Signalerfassungsachsen umfasst, wobei die Dezimierung ein Reduktionsverhältnis nutzt und aus dem Ersetzen der auf der Basis der erfassten Signale berechneten Positionen in einem Raumfenster durch ihr Baryzentrum besteht.

2. System zum Erkennen von Gesten nach Anspruch 1, **dadurch gekennzeichnet, dass** die Normalisierung eine Zentrierung vor der Reduktion der erfassten Signale beinhaltet.

3. System zum Erkennen von Gesten nach einem der Ansprüche 1 bis 2, **dadurch gekennzeichnet, dass** das Modul (230) zum Vergleichen der über einen Zeitraum erfassten Signale den Vergleich unter Ausführung eines dynamischen zeitlichen Verformungsalgorithmus durchführt.

4. System zum Erkennen von Gesten nach Anspruch 3, **dadurch gekennzeichnet, dass** das Speichermodul für jede Signalklasse einen Datenvektor umfasst, der wenigstens ein Maß für den Abstand von zu jeder Klasse gehörenden Signalen repräsentiert.

5. System zum Erkennen von Gesten nach Anspruch 4, **dadurch gekennzeichnet, dass** der Datenvektor, der wenigstens einen Abstandsmesswert der zu jeder Klasse gehörenden Signale repräsentiert, für jede Klasse von gespeicherten Signalen wenigstens einen Intra-Klassen-Abstandsmesswert und Abstandsmesswerte zwischen der Klasse und jeder der anderen gespeicherten Klassen umfasst.

6. System zum Erkennen von Gesten nach Anspruch 5, **dadurch gekennzeichnet, dass** wenigstens einer der Intra-Klassen- oder Inter-Klassen-Abstandsmesswerte jeweils gleich dem Mittel der paarweisen Abstände zwischen Signalen der Klasse oder zwischen Signalen von zwei Klassen ist, wobei jeder Abstand zwischen Signalen, die Gesten repräsentieren, die zu einer Klasse gehören, als das Minimum der quadratischen Abweichung zwischen Signalprobensätzen auf Verformungswegen des DTW-Typs berechnet wird.

7. System zum Erkennen von Gesten nach Anspruch 3, **dadurch gekennzeichnet, dass** der dynamische zeitliche Verformungsalgorithmus ein Kriterium zum Erkennen der Geste nutzt, repräsentiert durch die über einen Zeitraum erfassten Signale auf der Basis eines Abstandsmesswertes der über einen Zeitraum erfassten Signale mit dem Vektor, der Klassen von in dem Speichermodul gespeicherten Referenzsignalen repräsentiert.

8. System zum Erkennen von Gesten nach Anspruch 7, **dadurch gekennzeichnet, dass** die Abstandsmessung durch Berechnen eines Similaritätsindexes zwischen dem wenigstens einen Messsignal und den Referenzsignalen mit einem Algorithmus des DTW-Typs auf dem Pfad minimaler Kosten erfolgt, der durch eine Matrix geht, deren Koeffizienten ausgewählt sind aus einer Gruppe umfassend euklidische Distanzen zwischen dem Vektor, dessen Komponenten die Messwerte der Achsen von wenigstens einem Sensor auf dem zu klassierenden Signal und dem Vektor derselben Komponenten auf dem Referenzsignal sind, und die Derivate des skalaren Produkts des Messwertvektors und des Referenzvektors.

9. System zum Erkennen von Gesten nach Anspruch 7, **dadurch gekennzeichnet, dass** das Modul zum Erfassen der Signale wenigstens zwei Sensoren umfasst, und dadurch, dass das System ferner ein Modul zum Fusionieren von Daten aus dem Vergleichsmodul für die wenigstens zwei Sensoren umfasst, wobei das Vergleichsmodul eine Abstimmungsfunktion zwischen den Daten aus dem Vergleichsmodul für die wenigstens zwei Sensoren ausführen kann.

10. System zum Erkennen von Gesten nach Anspruch 9, **dadurch gekennzeichnet, dass** die Abstandsmessung durch eine der Operationen erfolgt, die zu der Gruppe gehören, die Folgendes umfasst: i) Berechnen, durch einen Algorithmus des DTW-Typs, eines Similaritätsindexes zwischen dem wenigstens einen Messsignal und den Referenzsignalen auf dem Pfad minimaler Kosten, der durch eine Matrix von euklidischen Distanzen zwischen dem Vektor verläuft, dessen Komponenten die Messwerte der Achsen der wenigstens zwei Sensoren auf dem zu klassierenden Signal und dem Vektor derselben Komponenten auf dem Referenzsignal sind, wobei der Similaritätsindex den Abstandsmesswert bildet; ii) Berechnen, durch einen Algorithmus des DTW-Typs, für jeden Sensor, eines Similaritätsindexes zwischen dem wenigstens einen Messsignal und den Referenzsignalen auf dem Pfad minimaler Kosten, der durch eine Matrix von euklidischen Distanzen zwischen dem Vektor verläuft, dessen Komponenten die Messwerte der Achsen von einem der wenigstens zwei Sensoren auf dem zu klassierenden Signal und dem Vektor derselben Komponenten auf dem Referenzsignal sind, dann Berechnen des Abstandsmesswertes durch Multiplizieren der als Ausgang der Berechnungen auf allen Sensoren bereitgestellten Similaritätsindexe.

**11.** System zum Erkennen von Gesten nach Anspruch 9, **dadurch gekennzeichnet, dass** die Abstandsmessung durch Berechnen, für jeden Sensor, eines Similaritätsindexes zwischen dem wenigstens einen Messsignal und den Referenzsignalen auf dem Pfad minimaler Kosten erfolgt, der durch eine Matrix geht, deren Elemente die Derivate des skalaren Produkts des Messwertvektors und des Referenzvektors sind, dann Berechnen des Abstandsmesswertes durch Multiplizieren der als Ausgang der Berechnungen auf allen Sensoren bereitgestellten Similaritätsindexe.

**12.** System zum Erkennen von Gesten nach Anspruch 9, **dadurch gekennzeichnet, dass** die Abstandsmessung durch Berechnen, durch einen DTW-Algorithmus, für jeden Sensor, eines Similaritätsindexes zwischen dem wenigstens einen Messsignal und den Referenzsignalen auf einem Pfad minimaler Kosten erfolgt, der durch eine Matrix läuft, die entweder durch die euklidischen Distanzen zwischen dem Vektor gebildet wird, dessen Komponenten die Messwerte der Achsen von einem der wenigstens zwei Sensoren auf dem zu klassierenden Signal und dem Vektor derselben Komponenten auf dem Referenzsignal sind, oder durch die Derivate des skalaren Produkts des Messwertvektors und des Referenzvektors, dann Berechnen des Abstandsmesswertes durch Multiplizieren der als Ausgang der Berechnungen auf allen Sensoren bereitgestellten Similaritätsindexe.

**13.** System zum Erkennen von Gesten nach einem der Ansprüche 1 bis 12, **dadurch gekennzeichnet, dass** das Vorverarbeitungsmodul eine Beseitigungsfunktion, durch Schwellenwertbildung innerhalb der erfassten Signale, von denen ausführt, die Inaktivitätsperioden entsprechen, durch Filtern der Variationen der Signale, die kleiner sind als ein Schwellenwert, ausgewählt in einem ebenfalls gewählten Zeitfenster.

**14.** System zum Erkennen von Gesten nach einem der Ansprüche 1 bis 13, **dadurch gekennzeichnet, dass** es ferner am Ausgang des Vorverarbeitungsmoduls (240) ein Tendenzextraktionsmodul (910) umfasst, das die Ausführung des Vergleichsmoduls (230) steuern kann.

**15.** System zum Erkennen von Gesten nach Anspruch 14, **dadurch gekennzeichnet, dass** das Tendenzextraktionsmodul die Ausführung des Vergleichsmoduls steuert, wenn die Variation einer charakteristischen Größe von einem der über einen Zeitraum erfassten Signale eine bestimmte Schwelle übersteigt.

**16.** System zum Erkennen von Gesten nach einem der Ansprüche 1 bis 15, **dadurch gekennzeichnet, dass** es ferner am Eingang des Speichermoduls (220) ein Modul (920) zum Umgruppieren von Klassen in K Gruppen von Gestenfamilien repräsentierenden Klassen umfasst.

**17.** System zum Erkennen von Gesten nach Anspruch 15 und Anspruch 16, **dadurch gekennzeichnet, dass** das Steuern des Vergleichsmoduls die Ausführung einer Funktion des Auswählens von derjenigen von K Gruppen, deren Vergleichssignal am nächsten liegt, dann eines dynamischen zeitlichen Verformungsalgorithmus zwischen dem Vergleichssignal und den Gesten der Klassen der gewählten Gruppe auslöst.

**18.** Verfahren zum Erkennen von Gesten einer Entität, das Folgendes beinhaltet:

- einen Schritt des Erfassens, durch einen Trägheitsmesssensor entlang drei Achsen, von Signalen, die durch die Bewegungen der Entität erzeugt werden, gemäß wenigstens drei Freiheitsgraden,
- einen Schritt des Speicherns von Daten, die zuvor erfasste Signale repräsentieren, organisiert in Gestenklassen,
- einen Schritt des Vergleichens wenigstens eines Teils der über einen Zeitraum erfassten Signale mit Klassen von zuvor gespeicherten Signalen, die Entitätsgesten repräsentieren,
- Bereitstellen wenigstens eines Teils der erfassten Signale und der Ausgänge des Vergleichsschrittes als Eingang des Speicherschrittes zur Verarbeitung darin, wobei die Ergebnisse der Verarbeitungen durch die laufenden Verarbeitungen beim Vergleichsschritt berücksichtigt werden,
- wobei das Verfahren ferner einen Vorverarbeitungs schritt vor dem Vergleichsschritt wenigstens eines Teils der über einen Zeitraum erfassten Signale beinhaltet, wobei die Vorverarbeitung Folgendes beinhaltet:

  ◦ Beseitigen, durch Schwellenwertbildung innerhalb der erfassten Signale, von denjenigen, die Inaktivitätsperioden entsprechen,
  ◦ Unterabtasten der erfassten Signale, und
  ◦ Normalisieren durch Reduktion der Signale,

wobei das Verfahren **dadurch gekennzeichnet ist, dass** die Unterabtastung eine regelmäßige Dezimierung eines von den erfassten Signalen abgeleiteten räumlichen Signals ist, wobei das räumliche Signal eine Bahn mit einer Anzahl von Dimensionen gleich einer Anzahl von Signalerfassungsachsen hat, wobei die Dezimierung ein Reduktionsverhältnis nutzt und im Ersetzen der berechneten Positionen auf der Basis der in einem Raumfenster erfassten Signale durch ihr Baryzentrum besteht.

**Claims**

1.  A system for recognizing gestures of an entity, comprising

    - a module (210) for capturing signals generated by said movements of said entity, comprising a sensor for inertial measurements along three axes,
    - a module (220) for storing data representative of signals which have been captured beforehand and organized in classes of gestures,
    - a module (230) for comparing at least some of the signals captured over a time window with said classes of stored signals,
    - said system being arranged so that at least some of the captured signals and of the outputs of the comparison module are delivered as inputs to the storage module, to be processed therein, the results of said processing operations being taken into account by the current processing operations of the comparison module,
    - said system further comprising a module (240) for preprocessing at least some of said signals captured over a time window, said preprocessing comprising

        ○ elimination (2410) by thresholding within said captured signals of those corresponding to periods of inactivity,
        ○ subsampling (2420) of the captured signals and
        ○ normalization (2430) by reduction of said signals,

    said system being **characterized in that** the subsampling (2420) is a regular decimation of a spatial signal derived from the captured signals, said spatial signal comprising a path having a number of dimensions equal to the number of signal capture axes, the decimation using a reduction ratio and consisting of replacing positions calculated from the signals captured on a spatial window by their center of gravity.

2.  The gesture recognition system according to claim 1, **characterized in that** the normalization comprises centering before reduction of said captured signals.

3.  The gesture recognition system according to one of claims 1 to 2, **characterized in that** said module (230) for comparing the signals captured over a time window performs said comparison by executing a dynamic time warp algorithm.

4.  The gesture recognition system according to claim 3, **characterized in that** said storage module comprises, for each signal class, a data vector representative of at least one distance measurement for the signals belonging to each class.

5.  The gesture recognition system according to claim 4, **characterized in that** the data vector representative of at least one distance measurement for the signals belonging to each class comprises, for each class of signals stored, at least one intraclass distance measurement and measurements of distances between said class and each of the other classes stored.

6.  The gesture recognition system according to claim 5, **characterized in that** at least one of the intraclass or interclass distance measurements is equal to the average of the pairwise distances between signals of the class or between signals of the two classes, respectively, each distance between signals representative of gestures belonging to a class being calculated as the minimum of the root mean square deviation between sequences of samples of the signals on deformation paths of a DTW type.

7.  The gesture recognition system according to claim 3, **characterized in that** said dynamic time warp algorithm uses a gesture recognition criterion represented by said signals captured over a time window based on a measurement of the distance of said signals captured over a time window with the vector representative of the classes of reference signals stored in said storage module.

8. The gesture recognition system according to claim 7, **characterized in that** said distance measurement is carried out by calculating, using a DTW algorithm, an index of similarity between the at least one measurement signal and the reference signals on the minimum cost path through a matrix, the coefficients of which are selected in a group comprising Euclidean distances between the vector whose components are the measurements of the axes of the at least one sensor on the signal to be classified and the vector of the same components on the reference signal and the derivatives of the scalar product of the measurement vector and the reference vector.

9. The gesture recognition system according to claim 7, **characterized in that** said module for capturing said signals comprises at least two sensors and **in that** said system further comprises a module for merging the data coming from the comparison module for the at least two sensors, the comparison module being capable of performing a voting function between said data coming from the comparison module for the at least two sensors.

10. The gesture recognition system according to claim 9, **characterized in that** said distance measurement is carried out by one of the operations belonging to the group comprising: i) a calculation, using a DTW algorithm, of an index of similarity between the at least one measurement signal and the reference signals on the minimum cost path through a matrix of the Euclidean distances between the vector whose components are the measurements of the axes of the at least two sensors on the signal to be classified and the vector of the same components on the reference signal, said index of similarity constituting the distance measurement; ii) a calculation, using a DTW algorithm, for each sensor, of an index of similarity between the at least one measurement signal and the reference signals on the minimum cost path through a matrix of the Euclidean distances between the vector whose components are the measurements of the axes of one of the at least two sensors on the signal to be classified and the vector of the same components on the reference signal, followed by a calculation of the distance measurement by multiplying the indices of similarity delivered as output of the calculations on all the sensors.

11. The gesture recognition system according to claim 9, **characterized in that** said distance measurement is carried out by calculating, for each sensor, an index of similarity between the at least one measurement signal and the reference signals on the minimum cost path through a matrix whose elements are the derivatives of the scalar product of the measurement vector and the reference vector, followed by a calculation of the distance measurement by multiplying the indices of similarity delivered as output of the calculations on all the sensors.

12. The gesture recognition system according to claim 9, **characterized in that** said distance measurement is carried out by calculating, using a DTW algorithm, for each sensor, an index of similarity between the at least one measurement signal and the reference signals on the minimum cost path through a matrix consisting either of the Euclidean distances between the vector whose components are the measurements of the axes of one of the at least two sensors on the signal to be classified and the vector of the same components on the reference signal, or by the derivatives of the scalar product of the measurement vector and the reference vector, followed by a calculation of the distance measurement by multiplying the indices of similarity delivered as output of the calculations on all the sensors.

13. The gesture recognition system according to one of claims 1 to 12, **characterized in that** the preprocessing module executes a thresholding elimination function within said captured signals to eliminate those corresponding to periods of inactivity by filtering out the variations in signals below a chosen threshold over a likewise chosen time window.

14. The gesture recognition system according to one of claims 1 to 13, **characterized in that** it further comprises, on the output side of the preprocessing module (240), a trend extraction module (910) capable of controlling the execution of the comparison module (230).

15. The gesture recognition system according to claim 14, **characterized in that** said trend extraction module controls the execution of the comparison module when the variation of a characteristic quantity of one of the signals captured over a time window exceeds a predetermined threshold.

16. The gesture recognition system according to one of claims 1 to 15, **characterized in that** it further comprises, on the input side of the storage module (220), a module (920) for regrouping classes into K groups of classes representative of families of gestures.

17. The gesture recognition system according to claim 15 and claim 16, **characterized in that** controlling the comparison module triggers the execution of a function of selection of that one of the K groups the compared signal of which is closest, followed by a dynamic time warp algorithm between said compared signal and the gestures of the classes of the said selected group.

**18.** A method of recognizing gestures of an entity, comprising:

- a step of capturing, by a sensor for inertial measurements along three axes, signals generated by said movements of said entity according to at least three degrees of freedom,
- a step of storing data representative of signals which have been captured beforehand and organized in classes of gestures,
- a step of comparing at least some of the signals captured over a time window with said classes of signals stored beforehand and representative of gestures of entities,
- delivering at least some of the captured signals and of the outputs of the comparison step as inputs to the storage step, to be processed therein, the results of said processing operations being taken into account by the current processing operations of the comparison step,
- said method further comprising a preprocessing step before the comparison step of preprocessing at least some of said signals captured over a time window, said preprocessing comprising

  ∘ elimination by thresholding within said captured signals of those corresponding to periods of inactivity,
  ∘ subsampling of the captured signals and
  ∘ normalization by reduction of said signals,

said method being **characterized in that** the subsampling is a regular decimation of a spatial signal derived from the captured signals, said spatial signal comprising a path having a number of dimensions equal to the number of signal capture axes, the decimation using a reduction ratio and consisting of replacing positions calculated from the signals captured on a spatial window by their center of gravity.

FIG.1

**FIG.2**

Base de référence (MEM)

Classe 1

Mode RECO

Classe i
● Sig représentatif (t), SIG(i)
● Vecteur critère (i), CRIT(i)

Classe N

FIG.3

Pour tout i → COMP

Signal
d'entrée → PRE → COMP → FUSION / VOTE → « Classe J »

Base de référence (MEM)

Classe 1

Mode ENRICH

Classe i
● Sig représentatif (t), SIG(i)
● Vecteur critère (i), CRIT(i)

Classe N

Signal
d'entrée → PRE

EP 2 483 758 B1

FIG.4

FIG.5

FIG.6

EP 2 483 758 B1

**Taux de faux**

*Taux de reconnaissance global pour acc et gyro*

**FIG.7A**

**FIG.7B**

FIG.8A

FIG.8B

EP 2 483 758 B1

FIG.9

EP 2 483 758 B1

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1335338 A
- GB 2419433 A
- WO 2005076114 A
- WO 2006090197 A
- WO 2008116642 A
- EP 0686931 A
- EP 0666544 B1
- WO 2003001340 A2

**Littérature non-brevet citée dans la description**

- **A E ROSENBERG.** *Automatic speaker verification: A review,* 1976
- **B-H JUANG.** *Fundamentals of Speech Récognition,* 1993
- **C. MYERS ; L. RABINER ; A. ROSENBERG.** *Performance tradeoffs in dynamic time warping algorithms for isolated word recognition,* 1980
- **K. BOEHM ; W. BROLL ; M. SOKOLEWICZ.** *Dynamic Gesture Recognition Using Neural Networks; A Fundament for Advanced Interaction Construction,* 1994
- **JUN KEUN CHANG.** Project EMMU : Emotional, Motional Measurement Unit. CSIDC Seoul national Univ, 2003
- **FUMITADA IKATURA.** Minimum Prediction Residual Principle Applied to Speech Récognition. *IEEE Transactions on Acoustics, Speech and Signal Processing,* Février 1975
- **L.R. RABINER ; A.E. ROSENBERG ; S. LEVINSON.** Considerations in Dynamic Time Warping Algorithms for Discrete Word Récognition. *IEEE Transactions on Acoustics, Speech and Signal Processing,* Décembre 1978
- **S. CHARBONNIER.** On Line Extraction of Temporal Episodes from ICU High-Frequency Data: a visual support for signal interprétation. *Computer Methods and Programs in Biomedicine,* vol. 78, 115-132
- **S. CHARBONNIER ; C. GARCIA-BELTAN ; C. CADET ; S. GENTIL.** Trends extraction and analysis for complex system monitoring and decision support. *Engineering Applications of Artificial Intelligence,* vol. 18 (1), 21-36